(19) Europäisches Patentamt
European Patent Office
Office européen des brevets

(11) **EP 4 468 208 A1**

(12) **EUROPEAN PATENT APPLICATION**

(43) Date of publication:
**27.11.2024 Bulletin 2024/48**

(21) Application number: **24171211.6**

(22) Date of filing: **19.04.2024**

(51) International Patent Classification (IPC):
**G06N 5/01** (2023.01)          **G06F 17/11** (2006.01)

(52) Cooperative Patent Classification (CPC):
**G06N 5/01; G06F 17/11**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 JP 2023084138**

(71) Applicant: **FUJITSU LIMITED**
**Kawasaki-shi, Kanagawa 211-8588 (JP)**

(72) Inventors:
• **WATANABE, Yasuhiro**
  **Kawasaki-shi, Kanagawa, 211-8588 (JP)**
• **TAMURA, Hirotaka**
  **Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(54) **DATA PROCESSING DEVICE, PROGRAM, AND DATA PROCESSING METHOD**

(57)    A data processing device including: a memory configured to store evaluation function information indicating an evaluation function of a combinatorial optimization problem represented by using a plurality of multi-valued variables; and a processor coupled to the memory, the processor being configured to perform processing including: generating, based on the evaluation function information, transition destination candidates that are a part of respective transitionable ranges of values of the plurality of multi-valued variables; calculating, for each of the plurality of multi-valued variables, a change amount of the values of the evaluation function associated with a transition to the transition destination candidates, based on the evaluation function information; specifying the multi-valued variables for which the transition is accepted, from among the plurality of multi-valued variables, based on the change amount; and causing the values of the specified multi-valued variables to transition to the values of the transition destination candidates.

FIG. 1

EP 4 468 208 A1

## Description

FIELD

The embodiments discussed herein are related to a data processing device, a program, and a data processing method.

BACKGROUND

There is an Ising machine that uses an Ising-type evaluation function, as a device that computes a large-scale discrete optimization problem that von Neumann computers are not good at. In the case of using the Ising machine, a combinatorial optimization problem is transformed into an Ising model that represents spin behavior of a magnetic material. Then, the Ising machine searches for a state of the Ising model in which a value of the Ising-type evaluation function is locally minimized, by a Markov chain Monte Carlo method such as a simulated annealing method or a replica exchange method (also called a parallel tempering method or the like). The state in which the minimum value of local minimum values of the evaluation function is reached is regarded as an optimal solution. A state of the Ising model can be expressed by a combination of values of a plurality of state variables. As a value of each of the state variables, 0 or 1 can be used.

The Ising-type evaluation function is defined, for example, by Formula (1) below.

[Mathematical Formula 1]

$$E = -\sum_{\langle i,j \rangle} W_{ij} x_i x_j - \sum_{i=1} b_i x_i \qquad (1)$$

The first term on the right side is for integrating the products of values (0 or 1) of two state variables and a weight value (representing the strength of correlation between the two state variables) for all combinations of all state variables of the Ising model with neither omission nor duplication. A state variable having i as the identification number is denoted by $x_i$, a state variable having j as the identification number is denoted by $x_j$, and a weight value indicating the magnitude of correlation between the state variables having i and j as the identification numbers is denoted by $W_{ij}$. The second term on the right side is obtained by summing up products of a bias coefficient and a state variable for each identification number. A bias coefficient for the identification number = i is indicated by $b_i$.

In addition, a change amount ($\Delta E_i$) of the value of the evaluation function associated with a change in the value of $x_i$ is represented by following Formula (2).

[Mathematical Formula 2]

$$\Delta E_i = -\Delta x_i \left( \sum_j W_{ij} x_j + b_i \right) = -h_i \Delta x_i \qquad (2)$$

In Formula (2), when $x_i$ changes to 0 from 1, $\Delta x_i$ has -1, and when the state variable $x_i$ changes to 1 from 0, $\Delta x_i$ has 1. Note that $h_i$ is called a local field, and $\Delta E_i$ is obtained by multiplying $h_i$ by a sign (+1 or -1) according to $\Delta x_i$.

For example, when $\Delta E_i$ is smaller than a noise value obtained based on a random number and the value of a temperature parameter, the Ising machine searches for a solution by repeating a process of inverting the value of $x_i$ and updating the local field.

Since a plurality of processes including calculation of $\Delta E_i$, determination of whether or not to invert the value of $x_i$, and the like can be performed in parallel, parallel trials for a plurality of state variables are possible.

Incidentally, some of the combinatorial optimization problems can be represented using a multi-valued variable, such as an assignment problem. In the assignment problem, an assignment state indicating to which assignment destination a certain element is assigned can be represented by a multi-valued variable. A technique of searching for a solution to an assignment problem, using an Ising machine, has been proposed in the past.

Examples of the related art include: Japanese Laid-open Patent Publication No. 2023-1055, and Japanese Laid-open Patent Publication No. 2022-165250 are disclosed as related art.

SUMMARY

TECHNICAL PROBLEM

In a technique of searching for a solution to an assignment problem by using an Ising machine, since an assignment state that is a multi-valued variable is transformed into $x_i$ of 0 or 1, the number of instances of $x_i$ is sometimes increased. When the number of instances of $x_i$ is increased, movement of data used for computation of $\Delta E_i$ with respect to each $x_i$ becomes complicated, and parallel trials become difficult in some cases.

In one mode, an object of an embodiment is to allow a combinatorial optimization problem expressed by a multi-valued variable to be computed by parallel trials.

SOLUTION TO PROBLEM

According to an aspect of the embodiments, there is provided a data processing device including: a memory configured to store evaluation function information indicating an evaluation function of a combinatorial optimization problem represented by using a plurality of multi-valued variables; and a processor coupled to the memory, the processor being configured to perform processing including: generating, based on the evaluation function information, transition destination candidates that are a part of respective transitionable ranges of values of the plurality of multi-valued variables; calculating, for each of the plurality of multi-valued variables, a change amount of the values of the evaluation function associated with a transition to the transition destination candidates, based on the evaluation function information; specifying the multi-valued variables for which the transition is accepted, from among the plurality of multi-valued variables, based on the change amount; and causing the values of the specified multi-valued variables to transition to the values of the transition destination candidates.

ADVANTAGEOUS EFFECTS OF INVENTION

In one mode, according to an embodiment, a combinatorial optimization problem expressed by a multi-valued variable may be computed by parallel trials.

BRIEF DESCRIPTION OF DRAWINGS

FIG. 1 is a diagram illustrating an exemplary data processing device according to a first embodiment;
FIG. 2 is a diagram illustrating an example of transition destination candidates of n multi-valued variables;
FIG. 3 is a diagram illustrating an exemplary data processing device according to a second embodiment;
FIG. 4 is a diagram illustrating an example of current states and states of transition destination candidates;
FIG. 5 is a diagram illustrating an example of matrix elements to be read from an F memory;
FIG. 6 is a diagram illustrating an example of matrix elements to be read from D memories;
FIG. 7 is a timing chart illustrating an operation example of the data processing device of the second embodiment;
FIG. 8 is a flowchart illustrating an example of a processing procedure of the data processing device of the second embodiment;
FIG. 9 is a diagram illustrating an exemplary data processing device according to a third embodiment;
FIG. 10 is a timing chart illustrating an operation example of the data processing device of the third embodiment;
FIG. 11 is a diagram illustrating an example of current states of a plurality of transition destination candidates and states of the transition destination candidates;
FIG. 12 is a diagram illustrating an example of matrix elements to be read from D memories;
FIG. 13 is a diagram illustrating an exemplary data processing device according to a fifth embodiment;
FIG. 14 is a diagram illustrating an example of matrix elements to be read from a $\Delta D$ memory;
FIG. 15 is a timing chart illustrating an operation example of the data processing device of the fifth embodiment; and
FIG. 16 is a diagram illustrating a hardware example of a computer that is an example of a data processing device.

DESCRIPTION OF EMBODIMENTS

Hereinafter, modes for carrying out embodiments will be described with reference to the drawings.
A data processing device according to each embodiment described below searches for a solution to a combinatorial optimization problem expressed by a plurality of multi-valued variables. As one of such combinatorial optimization problems, there is an assignment problem such as a quadratic assignment problem (QAP). The assignment problem is a non-deterministic polynomial time (NP)-hard combinatorial optimization problem having various real-world applications such as vehicle allocation routing and block arrangement of a field-programmable gate array (FPGA). The assignment problem is represented using a flow matrix and a distance matrix.

In a QAP for assigning n elements to n assignment destinations, the flow matrix and the distance matrix are represented by following Formulas (3) and (4).

[Mathematical Formula 3]

$$\mathbf{F} = (f_{ij}) \in \mathbb{R}^{n \times n} \tag{3}$$

[Mathematical Formula 4]

$$\mathbf{D} = (d_{kl}) \in \mathbb{R}^{n \times n} \tag{4}$$

The flow matrix (F) is a matrix of n rows and n columns. A matrix element at an i row and a j column is denoted by $f_{ij}$, which represents a flow amount between elements (for example, facilities) with identification numbers = i and j (for example, a cost such as the amount of supply transportation between facilities).

The distance matrix (D) is a matrix of n rows and n columns. A distance at k row and 1 column is denoted by $d_{kl}$, which represents a distance between assignment destinations (for example, places where facilities are arranged) with the identification numbers = k and 1.

The computation of the QAP is performed by searching for assignment that minimizes the value of an evaluation function represented by following Formula (5).

[Mathematical Formula 5]

$$E(\phi) = \sum_{i=1}^{n} \sum_{j=1}^{n} f_{ij} d_{\phi_i \phi_j} + \sum_{i=1}^{n} b_{i \phi_i} \tag{5}$$

In Formula (5), $\varphi_i$ (i = 1 to n) is a multi-valued variable representing an assignment destination of the element with the identification number = i. Therefore, an item obtained by attaching a subscript $\varphi_i \varphi_j$ to d represents a distance between the assignment destination of the element with the identification number = i and the assignment destination of the element with the identification number = j. An item obtained by attaching a subscript $i\varphi_i$ to b represents a bias coefficient when the element with the identification number = i is assigned to $\varphi_i$. Note that, when the sign of the evaluation function is flipped, the computation of the QAP is performed by searching for a state in which the value of the evaluation function is locally maximized.

(First Embodiment)

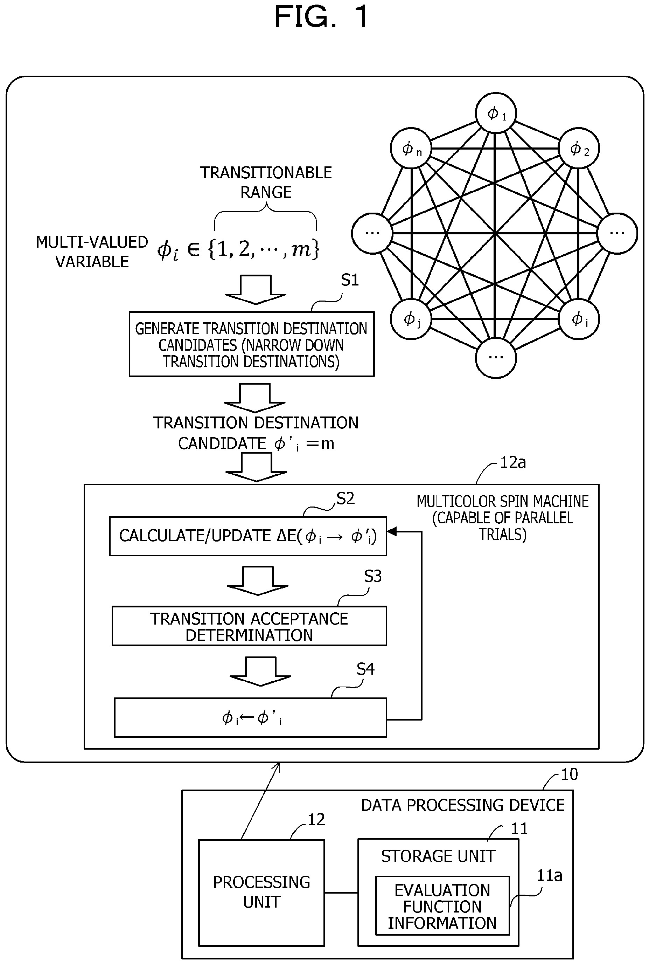

FIG. 1 is a diagram illustrating an exemplary data processing device according to a first embodiment.

A data processing device 10 according to the first embodiment includes a storage unit 11 and a processing unit 12.

The storage unit 11 may include a volatile semiconductor memory such as a random access memory (RAM) or may include a nonvolatile storage such as a hard disk drive (HDD) or a flash memory. In addition, the storage unit 11 may include both of a volatile semiconductor memory and a nonvolatile storage.

The storage unit 11 stores evaluation function information 11a regarding an evaluation function of a combinatorial optimization problem represented using a plurality of (hereinafter, assumed to be n) multi-valued variables. The evaluation function information 11a includes information such as a transitionable range of the value of each of the n multi-valued variables and a coefficient included in the evaluation function. Each of the n multi-valued variables may be an integer variable or a continuous variable. In addition, the n multi-valued variables may have different transitionable ranges from each other.

FIG. 1 illustrates $\varphi_1$ to $\varphi_n$ as examples of the n multi-valued variables. The subscripts 1 to n represent identification numbers of the multi-valued variables. In the example in FIG. 1, $\phi_i$, which is a multi-valued variable with the identification number = i, is an integer variable, and the transitionable range of $\varphi_i$ has m values of 1, 2, ..., and m.

As coefficients included in the evaluation function, for example, there are matrix elements (flow amounts and distances) of the flow matrix and the distance matrix as indicated by Formulas (3) and (4).

Note that the storage unit 11 may further store a computational condition of the combinatorial optimization problem. For example, in a case where the search is performed by the replica exchange method, the computational condition includes the number of replicas, the values of the temperature parameter to be set in each replica, and the like.

The processing unit 12 can be implemented by an electronic circuit such as an application specific integrated circuit (ASIC) or an FPGA, for example. However, the processing unit 12 can also be implemented by a processor such as a central processing unit (CPU), a graphics processing unit (GPU), or a digital signal processor (DSP). The processor executes, for example, a program stored in a memory such as a RAM (which may be the storage unit 11). A set of processors may be referred to as a multiprocessor or simply a "processor". In addition, the processing unit 12 may include a processor and an electronic circuit such as an ASIC or an FPGA.

FIG. 1 illustrates an example of a procedure of a process performed by the processing unit 12.

The processing unit 12 generates, for each of the n multi-valued variables, a transition destination candidate that is a part of the value transitionable range, based on the evaluation function information 11a (step S1).

For example, the processing unit 12 randomly generates one transition destination candidate from within the transitionable range for each of the n multi-valued variables. The processing unit 12 may randomly generate two or more transition destination candidates from within the transitionable range for each of the n multi-valued variables (refer to a fourth embodiment to be described later).

When the combinatorial optimization problem has a constraint condition, the transition destination candidate is generated so as to satisfy that constraint condition. For example, the transition destination candidate may be randomly generated for the multi-valued variable for which the transition destination candidate not satisfying the constraint condition has been generated, until the constraint condition is satisfied.

Note that the processing unit 12 may generate the transition destination candidate not randomly but in accordance with a predetermined rule. In the example in FIG. 1, m is generated as the transition destination candidate $\varphi'_i$ of $\varphi_i$.

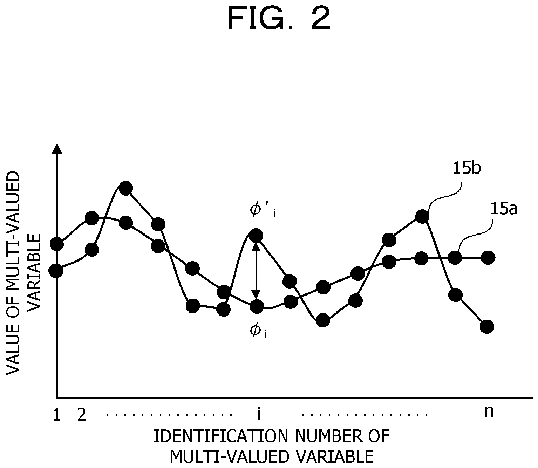

FIG. 2 is a diagram illustrating an example of transition destination candidates of the n multi-valued variables. The horizontal axis represents the identification number of the multi-valued variable, and the vertical axis represents the value of the multi-valued variable. A plot group 15a represents current values or initial values of the n multi-valued variables. A plot group 15b represents the values of the transition destination candidates for the initial values or current values of the n multi-valued variables.

In the example in FIG. 2, each multi-valued variable has two possible values, and the transition destination for the current value of each multi-valued variable is narrowed down to one.

After the process in step S1, the processing unit 12 calculates, for each of the n multi-valued variables, the change amount of the value of the evaluation function associated with the transition to the transition destination candidate, based on the evaluation function information 11a (step S2).

In a case where the evaluation function is represented by Formula (5), the change amount ($\Delta E(\varphi_i \rightarrow \varphi'_i)$) in the case of transition from $\varphi_i$ to $\varphi'_i$ can be represented by following Formula (6).

[Mathematical Formula 6]

$$\Delta E(\phi_i \rightarrow \phi'_i) = \sum_{j=1}^{n} f_{ij}(d_{\phi'_i \phi_j} - d_{\phi_i \phi_j}) + (b_{i\phi'_i} - b_{i\phi_i}) \qquad (6)$$

In Formula (6), d with a subscript $\varphi'_i \varphi_j$ attached denotes a distance between the current assignment destination of the element with the identification number = j and the assignment destination candidate of the element with the identification number = i. The current assignment destination of the element with the identification number = j can be represented by $\varphi_j$, and the assignment destination candidate of the element with the identification number = i can be represented by $\varphi'_i$. A distance between the assignment destination of the element with the identification number = j and the current assignment destination of the element with the identification number = i is denoted by d with the subscript $\varphi_i \varphi_j$ attached. The assignment destination of the element with the identification number = i can be represented by $\varphi_i$. A bias coefficient when the element with the identification number = i is assigned to $\varphi'_i$ is denoted by b with a subscript $i\varphi'_i$ attached. A bias coefficient when the element with the identification number = i is assigned to $\varphi_i$ is denoted by b with the subscript $i\varphi_i$ attached.

After the process in step S2, the processing unit 12 specifies a multi-valued variable for which the transition to the transition destination candidate is accepted, based on the calculated change amount (step S3). For example, the processing unit 12 determines whether or not to accept the transition from $\varphi_i$ to $\phi'_i$, based on the comparison result between the change amount and a predetermined value. The predetermined value is, for example, a noise value obtained based on a random number and the value of the temperature parameter. The processing unit 12 accepts the transition, for example, in a case where the change amount associated with the transition of $\varphi_i$ is smaller than log (rand) $\times$ T, which

is an example of the noise value obtained based on a uniform random number (rand) equal to or more than zero but equal to or less than one, and a temperature parameter (T).

Note that the processing unit 12 may accept the transition of the multi-valued variable that makes transition that gives the smallest value of the evaluation function, based on the calculated change amount.

The processing unit 12 causes the value of the multi-valued variable for which the transition is accepted to transition to the value of the transition destination candidate (step S4). FIG. 1 illustrates an example in which the value of $\varphi_i$ is transitioned to the value of $\varphi'_i$ that is a transition destination candidate. In a case of $\varphi'_i = m$, the value of $\varphi_i$ changes to m. Note that, at this time, the original value of $\varphi_i$ is adopted as the value of $\varphi'_i$ that is a transition destination candidate.

In a case where there is a plurality of multi-valued variables for which the transition has been accepted, the processing unit 12 may select one of these multi-valued variables. In that case, for example, the processing unit 12 selects a multi-valued variable with which the value of the evaluation function becomes the smallest due to the change amount associated with the transition, from among the plurality of multi-valued variables for which the transition has been accepted. The processing unit 12 may randomly select a multi-valued variable to be transitioned from among the plurality of multi-valued variables for which the transition has been accepted.

After the process in step S4, the processes from step S2 is repeated. At this time, in the process in step S2, the processing unit 12 may calculate a difference value of the change amount of the evaluation function associated with the transition by the process in step S4 and update the change amount, using the calculated difference value. The difference value of the change amount associated with the transition $\varphi_i \rightarrow \varphi'_i$ when $\varphi_j$ transitions to $\varphi'_j$ is represented by following Formula (7) in a case of $j \neq i$.

[Mathematical Formula 7]

$$\delta\Delta E(\phi_i \rightarrow \phi'_i) = f_{ij}\left(d_{\phi'_i\phi'_j} - d_{\phi_i\phi'_j} - d_{\phi'_i\phi_j} + d_{\phi_i\phi_j}\right) \qquad (7)$$

The processing unit 12 can read the matrix elements of the flow matrix and the distance matrix included in Formula (7) from the storage unit 11 to calculate $\delta\Delta E(\varphi_i - \varphi'_i)$.

Note that, in a case of $j = i$, the difference value of the change amount associated with the transition $\varphi_i \rightarrow \varphi'_i$ is represented by following Formula (8).

[Mathematical Formula 8]

$$\delta\Delta E(\phi'_i \rightarrow \phi_i) = -2\Delta E(\phi_i \rightarrow \phi'_i) \qquad (8)$$

The processing unit 12 can update the change amount in the case of $j \neq i$ in accordance with following Formula (9), using the difference value indicated by Formula (7).

[Mathematical Formula 9]

$$\Delta E(\phi_i \rightarrow \phi'_i) \leftarrow \Delta E(\phi_i \rightarrow \phi'_i)$$
$$+ f_{ij}\left(d_{\phi'_i\phi'_j} - d_{\phi_i\phi'_j} - d_{\phi'_i\phi_j} + d_{\phi_i\phi_j}\right) \qquad (9)$$

The processing unit 12 can update the change amount in the case of $j = i$ in accordance with following Formula (10), using the difference value indicated by Formula (8).

[Mathematical Formula 10]

$$\Delta E(\phi'_i \rightarrow \phi_i) \leftarrow -\Delta E(\phi_j \rightarrow \phi'_j) \qquad (10)$$

Note that Formula (9) can also be represented as following Formula (11).

[Mathematical Formula 11]

$$\Delta E(\phi_i \rightarrow \phi'_i) \leftarrow \Delta E(\phi_i \rightarrow \phi'_i) + f_{ij}\left(\Delta d_{i\phi'_j} - \Delta d_{i\phi_j}\right) \qquad (11)$$

In Formula (11), $\Delta d$ in parentheses of the second term on the right side is represented by following Formula

(12) when k = $\varphi_j$ or k = $\varphi'_j$ is assumed.
[Mathematical Formula 12]

$$\Delta d_{ik} = d_{\phi'_i k} - d_{\phi'_i k} \qquad (12)$$

A configuration example for efficiently calculating $\delta\Delta E(\varphi_i \to \varphi'_i)$ will be described in a second embodiment.

The processes in steps S2 to S4 can be performed in parallel for n multi-valued variables. That is, the processes in steps S2 to S4 can be implemented by a machine (denoted as a multicolor spin machine 12a in FIG. 1) obtained by extending an Ising machine capable of parallel trials so as to be capable of a multi-valued process. However, the processes in steps S2 to S4 may be serially performed on n multi-valued variables.

Note that, every time the process in step S3 is repeated a predetermined number of times, the process in step S1 described above may be performed again, and the transition destination candidate of each multi-valued variable may be regenerated. Alternatively, in a case where the minimum value of the evaluation function is not updated even if the process in step S3 is repeated a predetermined number of times, the transition destination candidate of each multi-valued variable may be regenerated.

In the case of performing the simulated annealing method, the processing unit 12 decreases the value of the above-described temperature parameter (T) in accordance with a predetermined temperature parameter switching schedule while the processes in steps S2 to S4 are repeated. Then, for example, the processing unit 12 outputs the values of the n multi-valued variables when a predetermined search end condition is satisfied, as a search result for a solution to the combinatorial optimization problem (for example, displays the values of the n multi-valued variables on a display device (not illustrated)). Note that the processing unit 12 may update, for example, the value of the evaluation function represented by Formula (5) every time the transition is accepted and hold the minimum value until then and the values of the n multi-valued variables when that minimum value was obtained. In that case, the processing unit 12 may output the values of the n multi-valued variables corresponding to the minimum value stored when the search end condition was satisfied, as a search result.

In a case where the processing unit 12 performs the replica exchange method, the processing unit 12 performs the processes in steps S2 to S4 indicated in FIG. 1 for each of a plurality of replicas set with different values of the temperature parameter from each other. Then, the processing unit 12 performs replica exchange each time the processes in steps S2 to S4 are repeated a predetermined number of times. For example, the processing unit 12 randomly selects two of the plurality of replicas. Then, the processing unit 12 exchanges the values of the temperature parameter or the values of the n multi-valued variables between the selected two replicas with a predetermined exchange probability based on a difference in the values of the evaluation function or a difference in the values of the temperature parameter between the replicas. For example, every time the transition is accepted in each replica, the processing unit 12 updates the value of the evaluation function represented by Formula (5) and holds the minimum value until then and the values of the n multi-valued variables when that minimum value was obtained. Then, for example, when a predetermined search end condition was satisfied, the processing unit 12 outputs, as a search result, the values of the n multi-valued variables corresponding to a smallest minimum value in all the replicas among minimum values stored in each replica.

As described above, the processing unit 12 of the data processing device 10 according to the first embodiment generates, for each of the n multi-valued variables, a transition destination candidate that is a part of the value transitionable range, based on the evaluation function information 11a. Then, the processing unit 12 calculates, for each of the n multi-valued variables, the change amount of the value of the evaluation function associated with the transition to the transition destination candidate, based on the evaluation function information 11a, and specifies the multi-valued variable for which the transition is accepted, based on the change amount. In addition, the processing unit 12 causes the value of the specified multi-valued variable to transition to the value of the transition destination candidate.

This may avoid complication in moving data used for computation of the change amount of the evaluation function, as compared with a case where each of the n multi-valued variables is transformed into a large number of binary state variables of 0 or 1, and thus parallel computation is facilitated. Therefore, the combinatorial optimization problem expressed by multi-valued variables may be computed by parallel trials. Since the parallel trials are enabled also for the combinatorial optimization problem expressed by multi-valued variables, the computational efficiency of such a combinatorial optimization problem is improved.

In addition, in a case where an assignment problem for assigning n elements to m assignment destinations is computed using state variables of 0 or 1, the number of state variables representing the assignment state is n × m, and the number of weighting factors between the state variables is $n^2 \times m^2$. In contrast to this, by using a multi-valued variable representing the assignment state, the factors to be stored are only $n^2$ flow amounts and $m^2$ distances. In a case where the change amount is updated using the difference value as described above, the change amount is supposed to be held. However, since the data amount desired for the holding is on the order of n × m, the memory capacity may be made smaller than a case of using the binary state variables, even when the flow amounts and the distances are taken into account.

(Second Embodiment)

A data processing device according to the second embodiment searches for a solution to an assignment problem represented by using a flow matrix and a distance matrix.

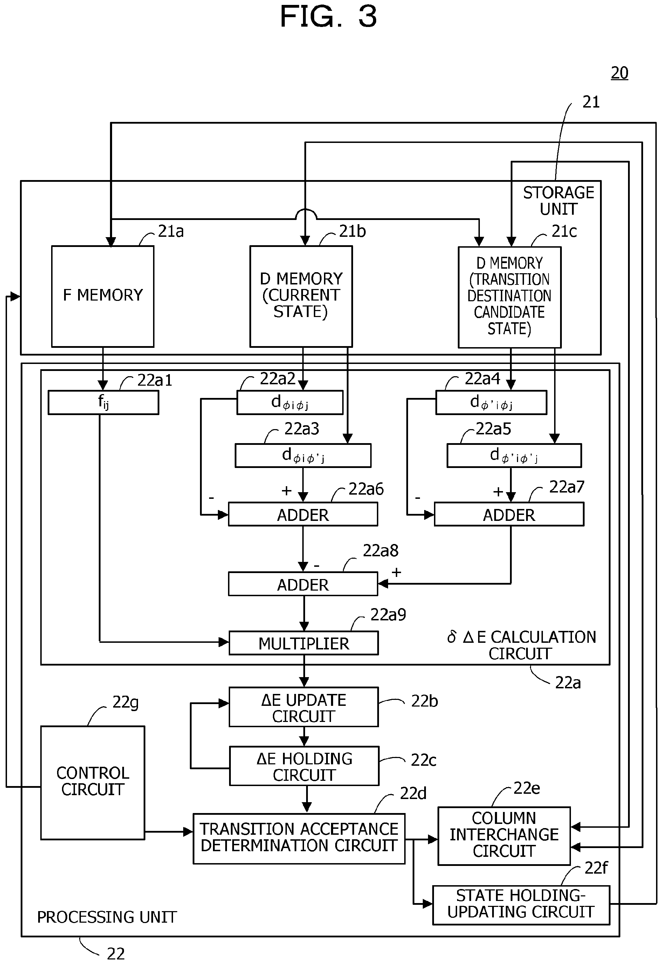

FIG. 3 is a diagram illustrating an exemplary data processing device according to the second embodiment.

A data processing device 20 according to the second embodiment includes a storage unit 21 and a processing unit 22.

The storage unit 21 includes an F memory 21a and D memories 21b and 21c. The F memory 21a and the D memories 21b and 21c may be, for example, volatile semiconductor memories such as RAMs or may be nonvolatile storages such as flash memories.

The F memory 21a stores the flow matrix represented by Formula (3).

The D memory 21b stores a matrix that is the distance matrix represented by Formula (4) and includes matrix elements arrayed based on the current values (representing the current states) of the n multi-valued variables.

The D memory 21c stores a matrix that is the distance matrix represented by Formula (4) and includes matrix elements arrayed based on the values of the respective transition destination candidates (representing the states of the transition destination candidates) of the n multi-valued variables.

In a case where a solution search using a plurality of replicas is performed, such as a case where replica exchange is performed, two types of distance matrices as described above are stored for each replica. The flow matrix may be shared among a plurality of replicas.

The processing unit 22 includes a $\delta\Delta E$ calculation circuit 22a, a $\Delta E$ update circuit 22b, a $\Delta E$ holding circuit 22c, a transition acceptance determination circuit 22d, a column interchange circuit 22e, a state holding-updating circuit 22f, and a control circuit 22g.

The $\delta\Delta E$ calculation circuit 22a computes a difference value of the change amount of the value of the evaluation function when $\varphi_j$ transitions to $\varphi'_j$ (represented by above-described Formula (7)) in parallel for n items. Hereinafter, the change amount will be denoted by $\Delta E$, and the difference value will be denoted by $\delta\Delta E$.

FIG. 3 illustrates a circuit example as an example of the $\delta\Delta E$ calculation circuit 22a. The $\delta\Delta E$ calculation circuit 22a includes registers 22a1, 22a2, 22a3, 22a4, and 22a5, adders 22a6, 22a7, and 22a8, and a multiplier 22a9.

The register 22a1 holds a flow amount ($f_{ij}$) read from the F memory 21a.

The register 22a2 holds a distance between the assignment destination ($\varphi_j$) of the element with the identification number = j and the current assignment destination ($\varphi_i$) of the element with the identification number = i, which have been read from the D memory 21b.

The register 22a3 holds a distance between the assignment destination candidate ($\varphi'_j$) of the element with the identification number = j and the assignment destination ($\varphi_i$) of the element with the identification number = i, which have been read from the D memory 21b.

The register 22a4 holds a distance between the assignment destination ($\varphi_j$) of the element with the identification number = j and the assignment destination candidate ($\varphi'_i$) of the element with the identification number = i, which have been read from the D memory 21c.

The register 22a5 holds a distance between the assignment destination candidate ($\varphi'_j$) of the element with the identification number = j and the assignment destination candidate ($\varphi'_i$) of the element with the identification number = i, which have been read from the D memory 21c.

The adder 22a6 outputs a value obtained by subtracting the distance held in the register 22a2 from the distance held in the register 22a3.

The adder 22a7 outputs a value obtained by subtracting the distance held in the register 22a4 from the distance held in the register 22a5.

The adder 22a8 outputs a value obtained by subtracting the output value of the adder 22a6 from the output value of the adder 22a7.

The multiplier 22a9 outputs a product of the flow amount held in the register 22a1 and the adder 22a8. The output of the multiplier 22a9 is $\delta\Delta E$.

The calculation of $\delta\Delta E$ can be performed in parallel with respect to the n multi-valued variables $\varphi_1$ to $\varphi_n$ by the circuit configuration as described above.

In a case of i $\neq$ j, the $\Delta E$ update circuit 22b updates $\Delta E$ by adding $\delta\Delta E$ calculated by the $\delta\Delta E$ calculation circuit 22a to the original $\Delta E$. In a case of i = j, the $\Delta E$ update circuit 22b updates $\Delta E$ by inverting the sign of $\Delta E$. The $\Delta E$ update circuit 22b can perform the update process for $\Delta E$ in parallel with respect to the n multi-valued variables $\varphi_1$ to $\varphi_n$ for i = 1 to n.

The $\Delta E$ holding circuit 22c holds the above-described $\Delta E$ regarding the n multi-valued variables. In a case where a solution search using a plurality of replicas is performed, such as a case where a replica exchange is performed, the $\Delta E$ holding circuit 22c is provided for each replica.

Based on the calculated ΔE, the transition acceptance determination circuit 22d specifies the multi-valued variable for which the transition to the transition destination candidate is accepted. For example, the transition acceptance determination circuit 22d determines whether or not to accept the transition of the value of the multi-valued variable, based on a comparison result between ΔE and a predetermined value supplied from the control circuit 22g. The predetermined value is, for example, a noise value obtained based on a random number and the value of the temperature parameter. The transition acceptance determination circuit 22d accepts the transition, for example, in a case where ΔE associated with the transition is smaller than $\log(\text{rand}) \times T$, which is an example of the noise value obtained based on a uniform random number (rand) equal to or more than zero but equal to or less than one, and the temperature parameter (T). The transition acceptance determination circuit 22d outputs the identification number of the multi-valued variable for which the transition has been accepted.

The column interchange circuit 22e interchanges the column of the distance matrix in the D memory 21b and the column of the distance matrix in the D memory 21c, which are designated by the identification number of the multi-valued variable for which the transition is accepted. Note that, in a case where reading from the distance matrix for calculating δΔE is performed for each column, the column interchange circuit 22e may interchange the rows instead of the columns.

The reason for interchanging the columns or rows of the distance matrices in this manner is as follows.

Although not illustrated, each of the δΔE calculation circuit 22a, the ΔE update circuit 22b, the ΔE holding circuit 22c, and the transition acceptance determination circuit 22d includes n circuit blocks that perform processes in parallel with respect to $\varphi_i$ (i = 1 to n). The n circuit blocks are arrayed in the order of the identification number = i. A portion of the F memory 21a in which $f_{ij}$ is saved is arranged in the vicinity of the circuit block corresponding to i such that the read n instances of $f_{ij}$ are easily propagated in parallel to the register 22a1 including the n circuit blocks. In order to use similar parallel propagation to read the matrix elements of the distance matrix, it is desirable to save the distance between $\varphi_i$ and $\varphi_j$ in a memory having i as a first identification number (for example, a column number) and $\varphi_j$ as a second identification number (for example, a row number). This is why the columns or rows are interchanged in the distance matrices.

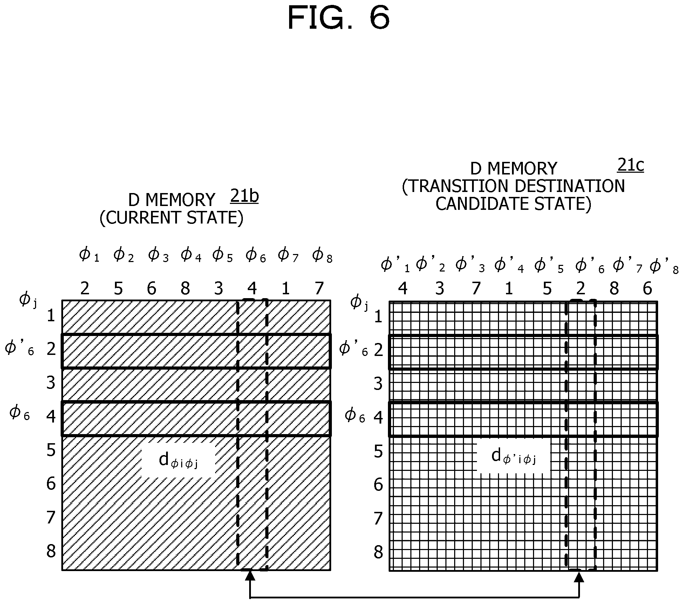

Note that an example of interchange will be described later (refer to FIG. 6).

The state holding-updating circuit 22f holds the values of the n multi-valued variables and additionally, causes the value of the multi-valued variable corresponding to the identification number output by the transition acceptance determination circuit 22d to transition to the value of the transition destination candidate. In addition, the state holding-updating circuit 22f designates a matrix element to be read from the F memory 21a for the δΔE calculation circuit 22a with the identification number of the multi-valued variable for which the transition is accepted.

Furthermore, the state holding-updating circuit 22f designates matrix elements to be read from the D memories 21b and 21c for the δΔE calculation circuit 22a with the values before and after the transition of the multi-valued variable for which the transition is accepted. In a case where a solution search using a plurality of replicas is performed, such as a case where a replica exchange is performed, the state holding-updating circuit 22f holds the values of the n multi-valued variables for each replica.

The control circuit 22g controls each unit of the data processing device 20. In addition, the control circuit 22g generates and regenerates the transition destination candidate of each multi-valued variable and rearranges the matrix elements of the distance matrix stored in the D memory 21c so as to correspond to the generated transition destination candidates. In addition, the control circuit 22g generates, for example, a predetermined value used for comparison with ΔE and supplies the generated predetermined value to the transition acceptance determination circuit 22d. In addition, the control circuit 22g performs control of a pipeline process to be described later, and the like.

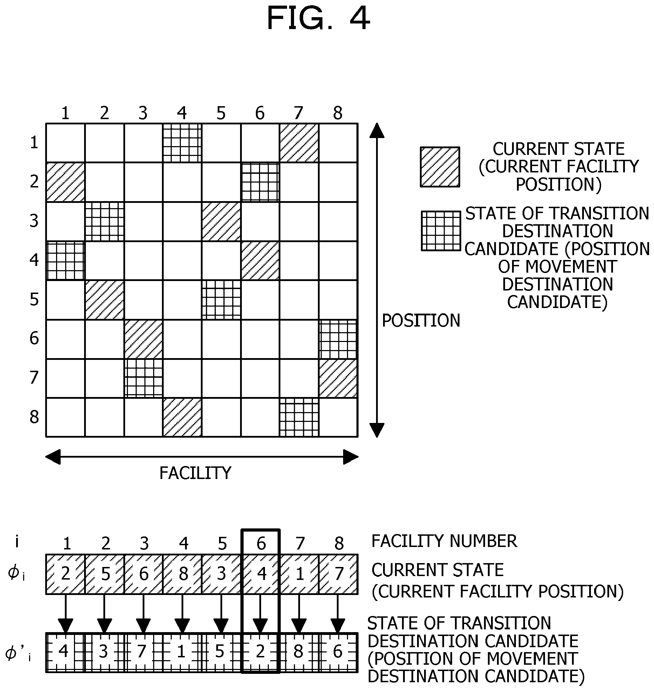

FIG. 4 is a diagram illustrating an example of current states and states of transition destination candidates. FIG. 4 illustrates an example of the current states and the states of the transition destination candidates in an assignment problem for assigning eight facilities to eight positions.

The current states indicate positions where eight facilities are currently arranged (current facility positions) and are represented by $\varphi_1$ to $\varphi_8$ that are multi-valued variables. Facility numbers are denoted by 1 to 8. For example, as in FIG. 4, the facility with the facility number = 1 is arranged at the position of $\varphi_1 = 2$, and the facility with the facility number = 6 is arranged at the position of $\varphi_6 = 4$.

The states of the transition destination candidates indicate positions of the movement destination candidates of the eight facilities and are represented by $\varphi'_1$ to $\varphi'_8$ that are multi-valued variables. For example, as in FIG. 4, the position of the movement destination candidate of the facility with the facility number = 1 is $\varphi'_1 = 4$, and the position of the movement destination candidate of the facility with the facility number = 6 is $\varphi'_6 = 2$.

Examples of the matrix elements to be read for the calculation of δΔE in a case where the transition of $\varphi_6$ to $\varphi'_6$ is accepted in the current states as illustrated in FIG. 4 are indicated below.

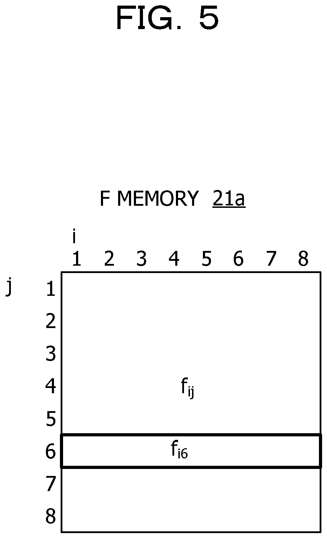

FIG. 5 is a diagram illustrating an example of the matrix elements to be read from the F memory.

When the transition of $\varphi_6$ to $\varphi'_6$ is accepted, the matrix elements $(f_{i6})$ in the j = 6-th row of the flow matrix are read from the F memory 21a in order to calculate δΔE.

FIG. 6 is a diagram illustrating an example of the matrix elements to be read from the D memories.

The matrix elements (distances) of the distance matrices stored in the D memories 21b and 21c are arrayed in the order of the identification numbers (1 to 8) of the positions in a column direction of the matrix and are arrayed in the order of the facility numbers in a row direction. In the distance matrix stored in the D memory 21b, the matrix elements are arrayed based on the current values of $\varphi_1$ to $\varphi_8$. In the distance matrix stored in the D memory 21c, the matrix elements are arrayed based on the values of the transition destination candidates $\varphi'_1$ to $\varphi'_8$ of $\varphi_1$ to $\varphi_8$.

In the distance matrices stored in the D memories 21b and 21c, a row is designated by the value of the multi-valued variable for which the transition is accepted or the transitioned value of the multi-valued variable, and the matrix elements included in the designated row are read.

When the transition of $\varphi_6$ to $\varphi'_6$ is accepted, the distance between the current position ($\varphi_6$) of the facility with the facility number = 6 and the current position ($\varphi_i$) of the facility with the facility number = i (i = 1 to 8) is read from the D memory 21b in order to calculate $\delta\Delta E$. In the example illustrated in FIG. 4, since $\varphi_6 = 4$ is met, the matrix elements in the $\varphi_j = 4$-th row of the distance matrix are read from the D memory 21b. Furthermore, the distance between the position ($\varphi'_6$) of the movement destination candidate of the facility with the facility number = 6 and the current position ($\varphi_i$) of the facility with the facility number = i is read from the D memory 21b. In the example illustrated in FIG. 4, since $\varphi'_6 = 2$ is met, the matrix elements in the $\varphi_j = 2$-th row of the distance matrix are read from the D memory 21b.

Meanwhile, the distance between the current position ($\varphi_6$) of the facility with the facility number = 6 and the position ($\varphi'_i$) of the movement destination candidate of the facility with the facility number = i is read from the D memory 21c. In the example illustrated in FIG. 4, since $\varphi_6 = 4$ is met, the matrix elements in the $\varphi_j = 4$-th row of the distance matrix are read from the D memory 21c. Furthermore, the distance between the position ($\varphi'_6$) of the movement destination candidate of the facility with the facility number = 6 and the position ($\varphi'_i$) of the movement destination candidate of the facility with the facility number = i is read from the D memory 21c. In the example illustrated in FIG. 4, since $\varphi'_6 = 2$ is met, the matrix elements in the $\varphi_j = 2$-th row of the distance matrix are read from the D memory 21c.

The reading of the matrix elements in the $\varphi_j = 4$-th row of the distance matrix from the D memories 21b and 21c can be performed in parallel at a first read timing. The reading of the matrix elements in the $\varphi_j = 2$-th row of the distance matrix from the D memories 21b and 21c can be performed in parallel at a second read timing.

After the computation of the difference value indicated by Formula (7), the matrix elements in the sixth columns of the distance matrices stored in the D memories 21b and 21c are interchanged with each other by the column interchange circuit 22e. This ensures that the distance matrices reflect the updated state in the D memories 21b and 21c.

Next, an operation example of the data processing device 20 according to the second embodiment will be described.

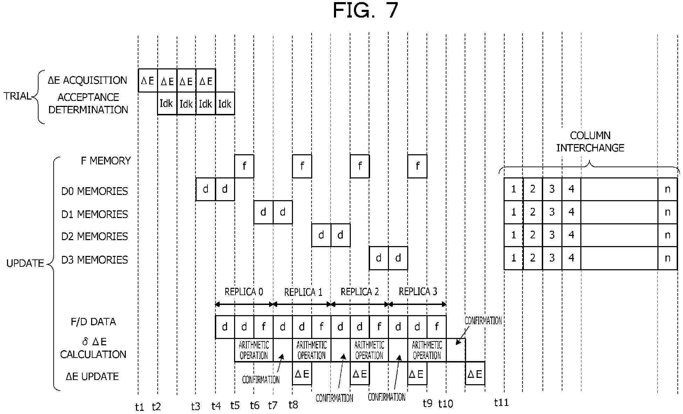

FIG. 7 is a timing chart illustrating an operation example of the data processing device of the second embodiment. In the operation example in FIG. 7, an example of a pipeline process using four replicas is illustrated. The process includes a trial phase and an update phase.

The trial phase includes a process in which the transition acceptance determination circuit 22d acquires $\Delta E$ from the $\Delta E$ holding circuit 22c and a process in which the transition acceptance determination circuit 22d performs transition acceptance determination.

The update phase includes a process of reading the matrix elements of the flow matrix from the F memory 21a, a process of reading the matrix elements of the distance matrices from the D memories 21b and 21c, and a process of interchanging columns of the distance matrices in the D memories 21b and 21c. The D memories 21b and 21c are provided for each replica. Therefore, in FIG. 7, the D memories 21b and 21c of respective replicas 0 to 3 are denoted as "D0 memories", "D1 memories", "D2 memories", and "D3 memories". In addition, the update phase includes a process in which the $\delta\Delta E$ calculation circuit 22a is made to hold the matrix elements of the flow matrix or the matrix elements of the distance matrices (denoted as F/D data in FIG. 7), a process in which the $\delta\Delta E$ calculation circuit 22a calculates $\delta\Delta E$, and a process in which $\Delta E$ is updated.

Between a timing t1 and a timing t4, a process of acquiring $\Delta E$ is performed in the order from the replica 0 to the replicas 1, 2, and 3. Between a timing t2 and a timing t5, the acceptance determination is performed in the above order from the replica 0. In each replica, the identification number (denoted as "Idk") of the multi-valued variable for which the transition has been accepted is output from the transition acceptance determination circuit 22d.

Between a timing t3 and a timing t9, a process of reading the matrix elements of the flow matrix from the F memory 21a and a process of reading the matrix elements of the distance matrices from the D memories 21b and 21c are performed. Reading of the matrix elements of the distance matrices is performed in two cycles for each replica. For example, as illustrated in FIG. 6, this is because the matrix elements of two rows are read twice in parallel from the D memories 21b and 21c.

From the timing t4 to a timing t10, the matrix elements read from the F memory 21a and the D memories 21b and 21c are made to be held in the register 22a1 to 22a5 of the $\delta\Delta E$ calculation circuit 22a. The matrix elements to be used for the calculation of $\delta\Delta E$ in the replica 0 are made to be held between the timing t4 and a timing t7, arithmetic operations for $\delta\Delta E$ are performed between the timing t5 and the timing t7, and an arithmetic result is confirmed between the timing t7 and a timing t8. At the timing t7 and the subsequent timings, processes similar to the above-described processes regarding the replica 0 are performed in the order of the replicas 1, 2, and 3. In addition, at the timing t8 and the subsequent timings, every time the arithmetic result for $\delta\Delta E$ for each replica is confirmed, $\Delta E$ of each replica is updated.

At a timing t11 and the subsequent timings, in the distance matrices stored in the D memories 21b and 21c as illustrated in FIG. 6, interchange of columns each including n matrix elements is performed in parallel for each replica. Since the n matrix elements included in each column are interchanged one by one between two columns, interchanging is completed in n cycles.

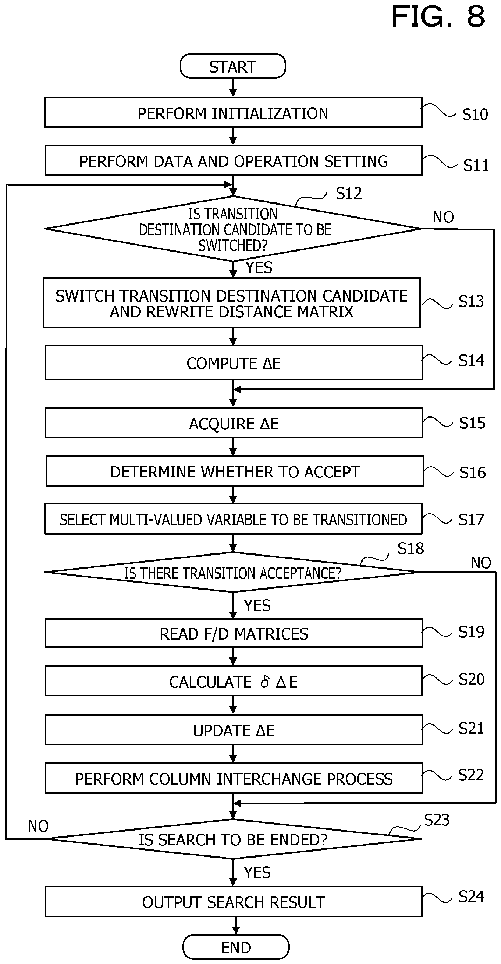

FIG. 8 is a flowchart illustrating an example of a processing procedure of the data processing device of the second embodiment.

First, under the control of the control circuit 22g, initialization (step S10) of each unit of the data processing device 20, and data setting and operation setting (step S11) are performed.

In the processes in steps S10 and S11, the flow matrix is written into the F memory 21a, and the distance matrix including the matrix elements arrayed based on the initial values of the n multi-valued variables is written into the D memory 21b. Furthermore, for each multi-valued variable, for example, transition destination candidates are generated as illustrated in FIG. 4. Then, the distance matrix including the matrix elements arrayed based on the values of the transition destination candidates is written into the D memory 21c.

Furthermore, the initial value of the evaluation function represented by Formula (5) is calculated and held based on the initial values of the n multi-valued variables and the evaluation function information (the flow matrix, the distance matrices, the bias coefficients, and the like). In addition, for each multi-valued variable, initial values of $\Delta E$ represented by Formula (6) are calculated and held in the $\Delta E$ holding circuit 22c. In addition, in a case where the replica exchange method is performed, initial values of the temperature parameter (T) are set in each replica. The values of the temperature parameter are set to different values for each replica. Besides, a solution search end condition and the like are set.

The control circuit 22g determines whether or not to switch the transition destination candidate (step S12). For example, every time an acceptance determination process in step S16 to be described later is repeated a predetermined number of times, the control circuit 22g determines to switch the transition destination candidate. The control circuit 22g may determine to switch the transition destination candidate in a case where the minimum value of the evaluation function is not updated even if the process in step S16 is repeated a predetermined number of times. In a case where it is determined to switch the transition destination candidate, the process in step S13 is performed, and in a case where it is not determined to switch the transition destination candidate, the process in step S15 is performed.

In the process in step S13, the control circuit 22g switches the transition destination candidate and rewrites the distance matrix stored in the D memory 21c to a distance matrix based on the value of the switched transition destination candidate. Furthermore, the control circuit 22g computes $\Delta E$, based on the current value of the multi-valued variable and the value of the switched transition destination candidate, and holds the computed $\Delta E$ in the $\Delta E$ holding circuit 22c (step S14).

In the process in step S15, the transition acceptance determination circuit 22d acquires n pieces of $\Delta E$ from the $\Delta E$ holding circuit 22c. Then, the transition acceptance determination circuit 22d determines whether or not to accept the transition to the transition destination candidate for each of the n multi-valued variables, based on the n pieces of $\Delta E$ (step S16). In a case where there is a multi-valued variable for which the transition to the transition destination candidate is accepted, the transition acceptance determination circuit 22d selects a multi-valued variable to be transitioned so as to satisfy the constraint condition (step S17).

The control circuit 22g determines whether or not there is a multi-valued variable for which the transition has been accepted (and that has been selected in the process in step S17) (step S18). In a case where it is determined that there is a multi-valued variable for which the transition has been accepted, the process in step S19 is performed. In a case where it is determined that there is no multi-valued variable for which the transition has been accepted, the process in step S23 is performed.

In the process in step S19, a process of reading the matrix elements of the flow matrix from the F memory 21a and a process of reading the matrix elements of the distance matrices from the D memories 21b and 21c are performed.

The $\delta\Delta E$ calculation circuit 22a calculates $\delta\Delta E$, using each read matrix element (step S20). Then, the $\Delta E$ update circuit 22b updates $\Delta E$ of the n multi-valued variables, using the calculated $\delta\Delta E$ (step S21).

The column interchange circuit 22e performs a column interchange process of interchanging the columns of the distance matrices stored in the D memories 21b and 21c, for example, as illustrated in FIG. 6, according to the accepted transition of the value of the multi-valued variable (step S22).

The control circuit 22g determines whether or not to end the search (step S23). For example, when the search time has reached a timeout limit, it is determined that the search has ended, and the search ends. In a case where it is determined not to end the search, the processes from step S12 are repeated.

In a case where it is determined to end the search, the control circuit 22g outputs a search result (step S24) and ends the process.

In the case of performing the simulated annealing method, the control circuit 22g decreases the value of the above-described temperature parameter (T) in accordance with a predetermined temperature parameter switching schedule while the processes in steps S12 to S23 are repeated. Then, for example, the control circuit 22g outputs the values of the n multi-valued variables when a predetermined search end condition is satisfied, as a search result for a solution to the assignment problem (for example, displays the values of the n multi-valued variables on a display device (not illustrated)). Note that the control circuit 22g may update, for example, the value of the evaluation function represented by Formula (5) every time the transition is accepted and hold the minimum value until then and the values of the n multi-valued variables when that minimum value was obtained. In that case, the control circuit 22g may output the values of the n multi-valued variables corresponding to the minimum value stored when the search end condition was satisfied, as a search result.

In a case where the control circuit 22g performs the replica exchange method, the control circuit 22g performs the processes in steps S12 to S23 on each of a plurality of replicas set with different values of the temperature parameter from each other. Then, the control circuit 22g performs replica exchange each time the processes in steps S12 to S23 are repeated a predetermined number of times. For example, the control circuit 22g randomly selects two of the plurality of replicas and exchanges the values of the temperature parameter or the values of the n multi-valued variables between the selected two replicas with a predetermined exchange probability based on a difference in the values of the evaluation function or a difference in the values of the temperature parameter between the replicas. For example, every time the transition is accepted in each replica, the control circuit 22g updates the value of the evaluation function represented by Formula (5) and holds the minimum value until then and the values of the n multi-valued variables when that minimum value was obtained. Then, for example, the control circuit 22g outputs, as a search result, the values of the n multi-valued variables corresponding to a smallest minimum value in all the replicas among minimum values stored in each replica when a predetermined search end condition is satisfied.

According to the data processing device 20 as described above, complication in moving data used for computation of the change amount of the evaluation function may be avoided, as compared with a case where each of the n multi-valued variables is transformed into a large number of binary state variables of 0 or 1, and thus parallel computation is facilitated. Therefore, the combinatorial optimization problem expressed by multi-valued variables may be computed by parallel trials. Since the parallel trials are enabled also for the combinatorial optimization problem expressed by multi-valued variables, the computational efficiency of such a combinatorial optimization problem is improved.

In addition, the data processing device 20 holds $\Delta E$ associated with the transition of each of the n multi-valued variables and updates $\Delta E$, using the calculated $\delta\Delta E$. This ensures that $\Delta E$ itself no longer has to be recomputed.

In addition, the data processing device 20 includes the F memory 21a that stores the flow matrix. The data processing device 20 further includes the D memory 21b that stores the distance matrix including the matrix elements arrayed based on the current values of the n multi-valued variables, and the D memory 21c that stores the distance matrix including the matrix elements arrayed based on the values of the respective transition destination candidates of the n multi-valued variables. Then, at the time of computing $\delta\Delta E$, the matrix elements of the flow matrix designated by the identification number of the multi-valued variable for which the transition is accepted are read from the F memory 21a. In addition, the matrix elements of the distance matrices designated by the values before and after the transition of that multi-valued variable are read from the D memories 21b and 21c. This may allow $\delta\Delta E$ to be efficiently calculated in parallel with respect to the n multi-valued variables.

(Third Embodiment)

A data processing device of a third embodiment is obtained by adopting a common circuit on the data processing device 20 of the second embodiment.

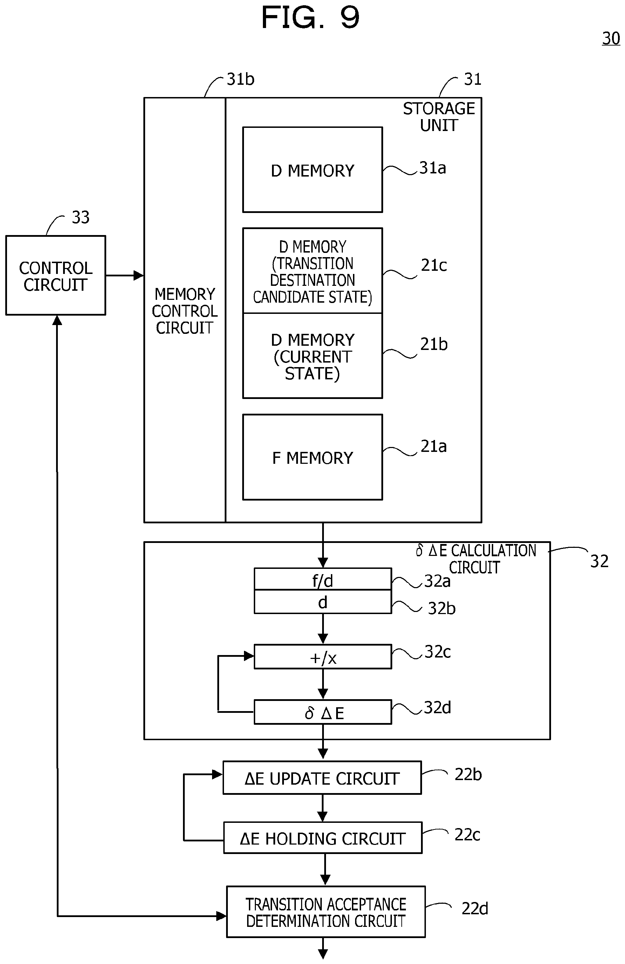

FIG. 9 is a diagram illustrating an exemplary data processing device according to the third embodiment. In FIG. 9, for the elements illustrated in FIG. 3, the same reference signs are given. Note that, in FIG. 9, the column interchange circuit 22e and the state holding-updating circuit 22f illustrated in FIG. 3 are not illustrated.

A storage unit 31 of a data processing device 30 of the third embodiment includes a D memory 31a and a memory control circuit 31b, as well as an F memory 21a and D memories 21b and 21c.

The D memory 31a stores a distance matrix common to each replica. The matrix elements of the distance matrix stored in the D memory 31a are arrayed in the order of the position identification numbers (1 to 8) in both of the row direction and the column direction. In a case where the columns of the distance matrices stored in the D memories 21b and 21c are interchanged, two columns corresponding to two columns to be interchanged are read from the distance matrix stored in the D memory 31a. Then, interchange is performed by writing one column into the position of the column to be interchanged in the D memory 21b and writing the other column into the column to be interchanged in the D memory 21c.

Also in the data processing device 20 in FIG. 3 described above, such a D memory 31a may be used to interchange columns.

The memory control circuit 31b controls write and read operations with respect to the F memory 21a and the D memories 21b, 21c, and 31a under the control of the control circuit 33. In order to calculate $\delta\Delta E$, the memory control

circuit 31b causes the above-described five kinds of matrix elements included in Formula (7) to be read from the F memory 21a and the D memories 21b and 21c at different read timings from each other, using a common read path.

A $\delta\Delta E$ calculation circuit 32 includes registers 32a, 32b, and 32d, and an arithmetic circuit 32c.

The register 32a holds the matrix elements (flow amounts and distances) read from the F memory 21a and the D memories 21b and 21c. The register 32b holds the matrix elements read from the D memories 21b and 21c.

The above-described five kinds of matrix elements held in the registers 32a and 32b are sequentially input to the arithmetic circuit 32c, and an intermediate arithmetic result or $\delta\Delta E$ of the Formula (7) is output based on these input matrix elements and the intermediate arithmetic result held in the register 32d.

For example, the arithmetic circuit 32c sequentially adds or subtracts the distance between $\varphi_j$ and $\varphi_i$, the distance between $\varphi'_j$ and $\varphi_i$, the distance between $\varphi'_j$ and $\varphi'_j$, and the distance between $\varphi'_j$ and $\varphi_i$, which are held in the registers 32a and 32b, thereby performing the arithmetic operation in parentheses on the right side of Formula (7). A result of this arithmetic operation is held in the register 32d as an intermediate arithmetic result. Then, the arithmetic circuit 32c outputs a product of the flow amount ($f_{ij}$) held in the register 32a and the intermediate arithmetic result held in the register 32d, whereby $\delta\Delta E$ is obtained.

The register 32d holds the intermediate arithmetic result output by the arithmetic circuit 32c or $\delta\Delta E$ that is an arithmetic result.

The control circuit 33 has a function similar to the function of the control circuit 22g of the processing unit 22 of the data processing device 20 illustrated in FIG. 3. Furthermore, the control circuit 33 instructs the memory control circuit 31b on the data read timing and the like in order to cause the $\delta\Delta E$ calculation circuit 32 to calculate $\delta\Delta E$ as described above.

Note that the data processing device 30 may store whether the current value of each multi-valued variable is the original value or the value of the generated transition destination candidate. In that case, the matrix elements of the distance matrix to be used for calculating $\delta\Delta E$ can be appropriately read without interchanging the columns between the distance matrices stored in the D memories 21b and 21c. However, when regenerating the transition destination candidates, the control circuit 33 rearranges the matrix elements of the distance matrix stored in the D memory 21b according to the current values of the multi-valued variables.

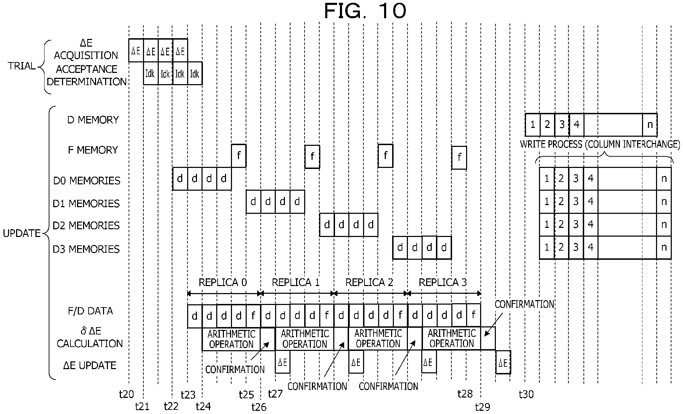

FIG. 10 is a timing chart illustrating an operation example of the data processing device of the third embodiment. In the operation example in FIG. 10, similarly to the timing chart illustrated in FIG. 7, an example of a pipeline process using four replicas is illustrated.

Between a timing t20 and a timing t23, a process of acquiring $\Delta E$ is performed in the order from the replica 0 to the replicas 1, 2, and 3. Between a timing t21 and a timing t24, the acceptance determination is performed in the above order from the replica 0. In each replica, the identification number of the multi-valued variable for which the transition has been accepted is output from a transition acceptance determination circuit 22d.

Between a timing t22 and a timing t25, a process of reading the matrix elements of the flow matrix from the F memory 21a and a process of reading the matrix elements of the distance matrices from the D memories 21b and 21c are performed. In the data processing device 30 of the third embodiment, reading of the matrix elements of the distance matrices is performed in four cycles for each replica.

From the timing t23 to a timing t29, the matrix elements read from the F memory 21a and the D memories 21b and 21c are made to be held in the registers 32a and 32b of the $\delta\Delta E$ calculation circuit 32. The matrix elements to be used for the calculation of $\delta\Delta E$ in the replica 0 are made to be held between the timing t23 and a timing t26, arithmetic operations for $\delta\Delta E$ are performed between the timing t24 and the timing t26, and an arithmetic result is confirmed between the timing t26 and a timing t27. At the timing t26 and the subsequent timings, processes similar to the above-described processes regarding the replica 0 are performed in the order of the replicas 1, 2, and 3. In addition, at the timing t27 and the subsequent timings, every time the arithmetic result for $\delta\Delta E$ for each replica is confirmed, $\Delta E$ of each replica is updated.

At a timing t30 and the subsequent timings, a write process of interchanging columns each including n matrix elements in the distance matrices stored in the D memories 21b and 21c is performed using the matrix elements of the distance matrix read from the D memory 31a. The write process is performed in parallel for each replica. Since the n matrix elements included in each column are interchanged one by one between two columns, interchanging is completed in n cycles. Note that, as described above, in a case where the data processing device 30 stores whether the current value of each multi-valued variable is the original value or the value of the generated transition destination candidate, the columns do not have to be interchanged between the distance matrices stored in the D memories 21b and 21c.

According to the data processing device 30 of the third embodiment as described above, the $\delta\Delta E$ calculation circuit 32 processes the five kinds of matrix elements with the common arithmetic circuit 32c. This may allow the circuit scale to be reduced as compared with the $\delta\Delta E$ calculation circuit 22a illustrated in FIG. 3.

(Fourth Embodiment)

In the second and third embodiments, one transition destination candidate for the value of each multi-valued variable has been assumed and described, but there may be a plurality of transition destination candidates for the value of each multi-valued variable.

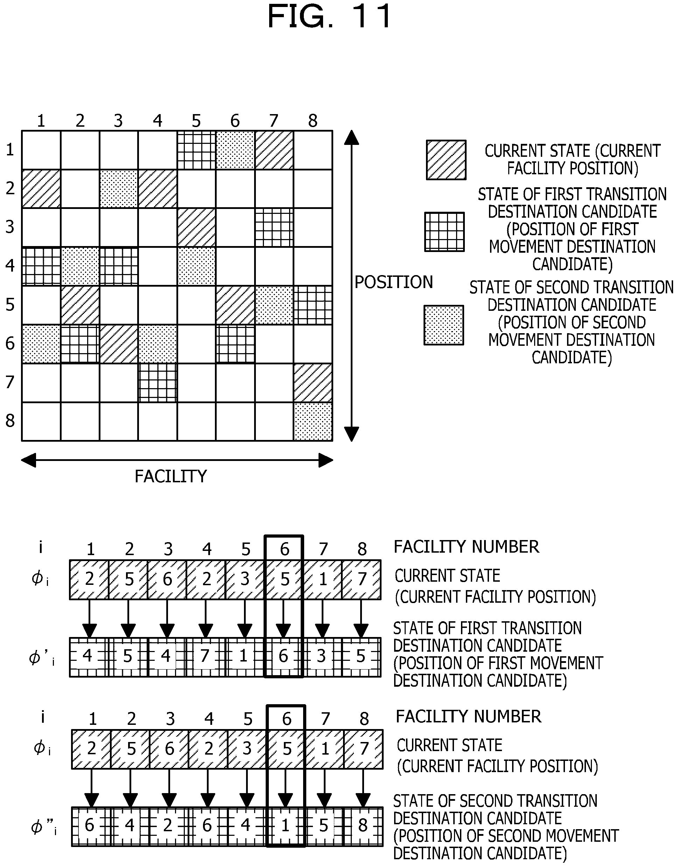

FIG. 11 is a diagram illustrating an example of current states of a plurality of transition destination candidates and states of the transition destination candidates. FIG. 11 illustrates an example of the current states and the states of two transition destination candidates (positions of movement destination candidates) in an assignment problem for assigning eight facilities to eight positions. In the example in FIG. 11, arrangement of a plurality of facilities at one position is permitted.

The states of first transition destination candidates are represented by $\varphi'_1$ to $\varphi'_8$ that are multi-valued variables. For example, as in FIG. 11, the position of a first movement destination candidate of the facility with the facility number = 1 is $\varphi'_i = 4$, and the position of a second movement destination candidate is $\varphi''_i = 6$. The position of the first movement destination candidate of the facility with the facility number = 6 is $\varphi'_6 = 6$, and the position of the second movement destination candidate is $\varphi''_6 = 1$.

Examples of the matrix elements to be read for the calculation of $\delta\Delta E$ in a case where the transition of $\varphi_6$ to $\varphi''_6$ is accepted in the current state as illustrated in FIG. 11 are indicated below.

For the matrix elements to be read from the F memory, similarly to the case illustrated in FIG. 5 where the transition of $\varphi_6$ to $\varphi'_6$ is accepted, the matrix elements ($f_{i6}$) of the j = 6-th row of the flow matrix are read from an F memory 21a.

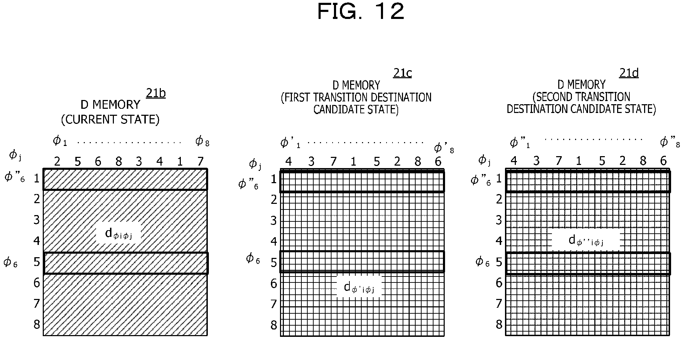

FIG. 12 is a diagram illustrating an example of the matrix elements to be read from the D memories.

When there are a first transition destination candidate state and a second transition destination candidate state, a D memory 21d corresponding to the second transition destination candidate state is used apart from a D memory 21b corresponding to the current state and a D memory 21c corresponding to the first transition destination candidate state.

The matrix elements (distances) of the distance matrices stored in the D memories 21b, 21c, and 21d are arrayed in the order of the identification numbers (1 to 8) of the positions in the column direction of the matrix and are arrayed in the order of the facility numbers in the row direction. In the distance matrix stored in the D memory 21b, the matrix elements are arrayed based on the current values of $\varphi_1$ to $\varphi_8$. In the distance matrix stored in the D memory 21c, the matrix elements are arrayed based on the values of the first transition destination candidates $\varphi'_1$, to $\varphi'_8$ of $\varphi_1$ to $\varphi_8$. In the distance matrix stored in the D memory 21d, the matrix elements are arrayed based on the values of the second transition destination candidates $\varphi''_1$ to $\varphi''_8$ of $\varphi_1$ to $\varphi_8$.

The difference value of the change amount associated with the transition of the value of the multi-valued variable with the identification number = i to the first transition destination candidate when the multi-valued variable $\varphi_j$ transitions to $\varphi''_j$ is represented by following Formula (13) in a case of $j \neq i$.

[Mathematical Formula 13]

$$\delta\Delta E(\phi_i \to \phi'_i) = f_{ij}\big(d_{\phi'_i \phi''_j} - d_{\phi_i \phi''_j} - d_{\phi'_i \phi_j} + d_{\phi_i \phi_j}\big) \qquad (13)$$

Note that, in a case of j = i, the difference value of the change amount associated with the transition of the value of the multi-valued variable with the identification number = i to the first transition destination candidate is represented by following Formula (14).

[Mathematical Formula 14]

$$\delta\Delta E(\phi_i \to \phi'_i) = -\Delta E(\phi_i \to \phi''_i) + \Delta E(\phi_i \to \phi'_i) \qquad (14)$$

In addition, the difference value of the change amount associated with the transition of the value of the multi-valued variable with the identification number = i to the second transition destination candidate when the multi-valued variable $\varphi_j$ transitions to $\varphi''_i$ is represented by following Formula (15) in a case of $j \neq i$.

[Mathematical Formula 15]

$$\delta\Delta E(\phi_i \to \phi''_i) = f_{ij}\big(d_{\phi''_i \phi''_j} - d_{\phi_i \phi''_j} - d_{\phi''_i \phi_j} + d_{\phi_i \phi_j}\big) \qquad (15)$$

Note that, in a case of j = i, the difference value of the change amount associated with the transition of the value of the multi-valued variable with the identification number = i to the second transition destination candidate is represented by following Formula (16).

[Mathematical Formula 16]

$$\delta\Delta E(\phi_i'' \to \phi_i) = -2\Delta E(\phi_i \to \phi_i'') \qquad (16)$$

When the transition of $\varphi_6$ to $\varphi''_6$ is accepted (in a case of j = 6), the distance between the current position ($\varphi_6$) of the facility with the facility number = 6 and the current position ($\varphi_i$) of the facility with the facility number = i (i = 1 to 8) is read from the D memory 21b in order to calculate $\delta\Delta E$ in Formula (13). In the example illustrated in FIG. 11, since $\varphi_6$ = 5 is met, the matrix elements in the $\varphi_j$ = 5-th row of the distance matrix are read from the D memory 21b. Furthermore, the distance between the position ($\varphi''_6$) of the second movement destination candidate of the facility with the facility number = 6 and the current position ($\varphi_i$) of the facility with the facility number = i is read from the D memory 21b. In the example illustrated in FIG. 11, since $\varphi''_6$ = 1 is met, the matrix elements in the $\varphi_j$ = 1-th row of the distance matrix are read from the D memory 21b.

Meanwhile, the distance between the current position ($\varphi_6$) of the facility with the facility number = 6 and the position ($\varphi'_i$) of the first movement destination candidate of the facility with the facility number = i is read from the D memory 21c. In the example illustrated in FIG. 11, since $\varphi_6$ = 5 is met, the matrix elements in the $\varphi_j$ = 5-th row of the distance matrix are read from the D memory 21c. Furthermore, the distance between the position ($\varphi'_6$) of the first movement destination candidate of the facility with the facility number = 6 and the position ($\varphi'_i$) of the first movement destination candidate of the facility with the facility number = i is read from the D memory 21c. In the example illustrated in FIG. 11, since $\varphi'_6$ = 1 is met, the matrix elements in the $\varphi_j$ = 1-th row of the distance matrix are read from the D memory 21c.

The distances to be read from the D memory 21b in order to calculate $\delta\Delta E$ in Formula (15) are the same as the distances in the case of calculating $\delta\Delta E$ in Formula (13). Meanwhile, in order to calculate $\delta\Delta E$ in Formula (15), the distance between the current position ($\varphi_6$) of the facility with the facility number = 6 and the position ($\varphi''_i$) of the second movement destination candidate of the facility with the facility number = i is read from the D memory 21d. In the example illustrated in FIG. 11, since $\varphi_6$ = 5 is met, the matrix elements in the $\varphi_j$ = 5-th row of the distance matrix are read from the D memory 21d. Furthermore, the distance between the position ($\varphi''_6$) of the second movement destination candidate of the facility with the facility number = 6 and the position ($\varphi''_i$) of the second movement destination candidate of the facility with the facility number = i is read from the D memory 21d. In the example illustrated in FIG. 11, since $\varphi''_6$ = 1 is met, the matrix elements in the $\varphi_j$ = 1-th row of the distance matrix are read from the D memory 21d.

Although the configuration of a data processing device of the fourth embodiment is not illustrated, a configuration using a plurality of transition destination candidates can be implemented by altering the configuration illustrated in FIG. 3 or 9 as appropriate. For example, the D memory 21d illustrated in FIG. 12 is added to the configuration illustrated in FIG. 3 or 9. In addition, $\delta\Delta E$ in Formulas (13) to (16) can be calculated by altering the $\delta\Delta E$ calculation circuit 22a or 32 illustrated in FIG. 3 or 9. Furthermore, a $\Delta E$ holding circuit 22c holds $\Delta E(\varphi_i \to \varphi'_i)$ in a case where $\varphi_i$ transitions to $\varphi'_i$ and $\Delta E(\varphi_i \to \varphi''_i)$ in a case where $\varphi_i$ transitions to $\varphi''_i$. A $\Delta E$ update circuit 22b updates $\Delta E(\varphi_i \text{ -> } \varphi'_i)$, using $\delta\Delta E$ calculated based on Formulas (13) and (14), and updates $\Delta E(\varphi_i \text{ -> } \varphi''_i)$, using $\delta\Delta E$ calculated based on Formulas (15) and (16). Based on $\Delta E(\varphi_i \to \varphi'_i)$ and $\Delta E(\varphi_i \to \varphi''_i)$, a transition acceptance determination circuit 22d specifies a multi-valued variable for which the transition to the first transition destination candidate or the second transition destination candidate is accepted.

Note that whether to accept the transition to the first transition destination candidate and the second transition destination candidate may not be determined simultaneously. In a case where it is determined whether or not the transition to the first transition destination candidate is to be accepted, using the D memory 21c, whether or not the transition to the second transition destination candidate is to be accepted does not have to be determined using the D memory 21d. This similarly applies to the reverse case. The transition destination candidate may be shifted as appropriate between the first transition destination candidate and the second transition destination candidate.

As described above, the data processing device of the fourth embodiment includes the D memories 21c and 21d that store the distance matrices including the matrix elements arrayed based on the values of the respective transition destination candidates. This may enable to lower the processing overhead caused by regenerating the transition destination candidate. In addition, for example, while the solution search is performed using the D memory 21c, the distance matrix in the D memory 21d can also be rewritten to a distance matrix corresponding to a new transition destination candidate.

(Fifth Embodiment)

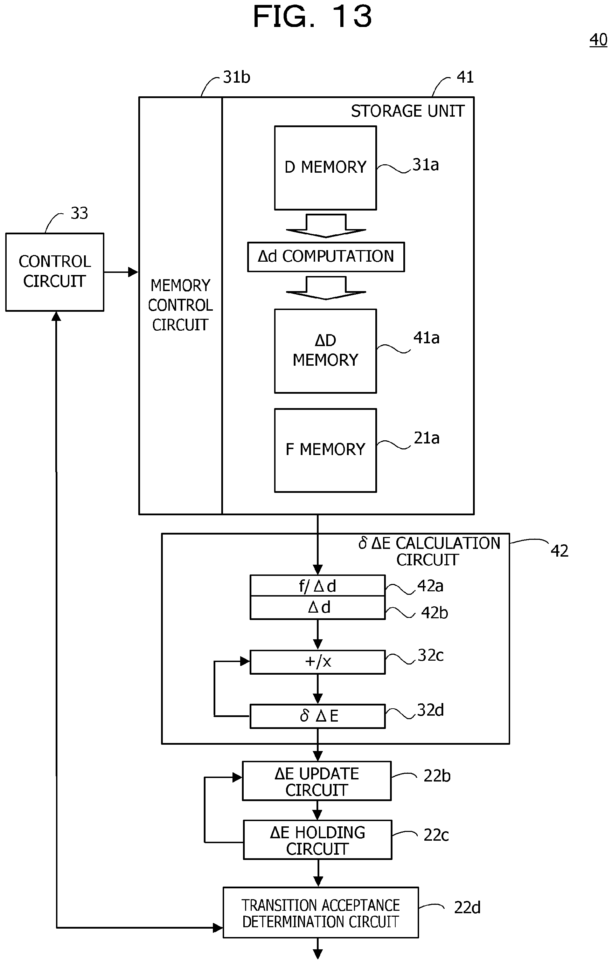

FIG. 13 is a diagram illustrating an exemplary data processing device according to a fifth embodiment. In FIG. 13, elements same as the elements illustrated in FIG. 9 are given the same reference signs.

In Formula (7), $\delta\Delta E$ can be modified as in Formula (17) below.
[Mathematical Formula 17]

$$\delta\Delta E(\phi_i \to \phi'_i) = f_{ij}\left((d_{\phi'_i\phi'_j} - d_{\phi_i\phi'_j}) - (d_{\phi'_i\phi_j} - d_{\phi_i\phi_j})\right) \quad (17)$$

The right side of Formula (17) includes the difference between the distance between $\varphi'_j$ and $\varphi'_i$ and the distance between $\varphi'_j$ and $\varphi_i$ and the difference between the distance between $\varphi_j$ and $\varphi'_i$ and the distance between $\varphi_j$ and $\varphi_i$.

In a data processing device 40 of the fifth embodiment, a storage unit 41 includes a $\Delta$D memory 41a that stores a matrix including matrix elements expressed by two differences as described above. The differences are arrayed in a matrix so as to be readable by designating row or column numbers. Hereinafter, the above matrix according to the differences will be referred to as a difference distance matrix.

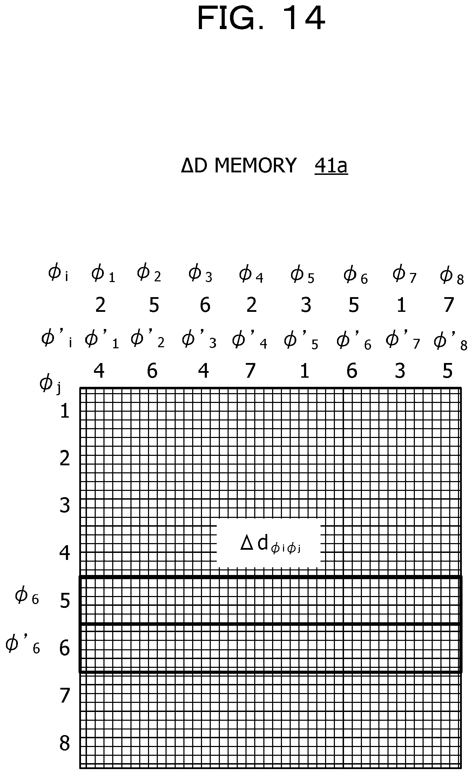

FIG. 14 is a diagram illustrating an example of the matrix elements to be read from the $\Delta$D memory.

The matrix elements in the $\varphi_j$ row of the difference distance matrix stored in the $\Delta$D memory 41a indicate the difference between the distance between $\varphi_j$ and $\varphi'_i$ and the distance between $\varphi_j$ and $\varphi_i$. The matrix elements in the $\varphi'_j$ row of the difference distance matrix indicate the difference between the distance between $\varphi'_j$ and $\varphi'_i$ and the distance between $\varphi'_j$ and $\varphi_i$.

When the transition of $\varphi_6$ to $\varphi'_6$ is accepted, the matrix elements in the $\varphi_6$ row of the difference distance matrix are read from the $\Delta$D memory 41a in order to calculate $\delta\Delta E$. In the example illustrated in FIG. 14, since $\varphi_6 = 5$ is met, the matrix elements in the $\varphi_6 = 5$-th row of the difference distance matrix are read. Furthermore, the matrix elements in the $\varphi'_6$ row of the difference distance matrix are read from the $\Delta$D memory 41a. In the example illustrated in FIG. 14, since $\varphi'_6 = 6$ is met, the matrix elements in the $\varphi'_6 = 6$-th row of the difference distance matrix are read.

Such a difference distance matrix is generated by difference computation ($\Delta$d computation) using the distance matrix stored in a D memory 31a. The difference computation is performed by a control circuit 33, for example. In a case where a solution search using a plurality of replicas is performed, the difference distance matrix is generated for each replica.

Note that the data processing device 40 may store whether the current value of each multi-valued variable is the original value or the value of the generated transition destination candidate. In this case, while the transition destination candidate is unchanged, the matrix elements to be used for the $\Delta$d computation can be appropriately read without interchanging columns in the distance matrix stored in the D memory 31a. However, when regenerating the transition destination candidates, the control circuit 33 rearranges the matrix elements of the distance matrix according to the current values of the multi-valued variables and the values of the transition destination candidates. Thereafter, the control circuit 33 performs the $\Delta$d computation to initialize the difference distance matrix stored in the $\Delta$D memory 41a.

A $\delta\Delta E$ calculation circuit 42 of the data processing device 40 includes registers 42a and 42b. The register 42a holds the matrix elements (flow amounts and difference values ($\Delta$d) of distances) read from an F memory 21a and the $\Delta$D memory 41a. The register 42b holds the matrix elements read from the $\Delta$D memory 41a.

An arithmetic circuit 32c outputs an intermediate arithmetic result or $\delta\Delta E$ of Formula (17), based on the matrix elements or the intermediate arithmetic result held in the registers 42a, 42b, and 32d.

For example, the arithmetic circuit 32c performs the arithmetic operation in parentheses on the right side of Formula (17) by subtracting two differences in $\Delta$d held in the registers 42a and 42b. A result of this arithmetic operation is held in the register 32d as an intermediate arithmetic result. Then, the arithmetic circuit 32c outputs a product of the flow amount ($f_{ij}$) held in a register 32a and the intermediate arithmetic result held in the register 32d, whereby $\delta\Delta E$ is obtained.

Other elements of the data processing device 40 are the same as the elements illustrated in FIG. 9.

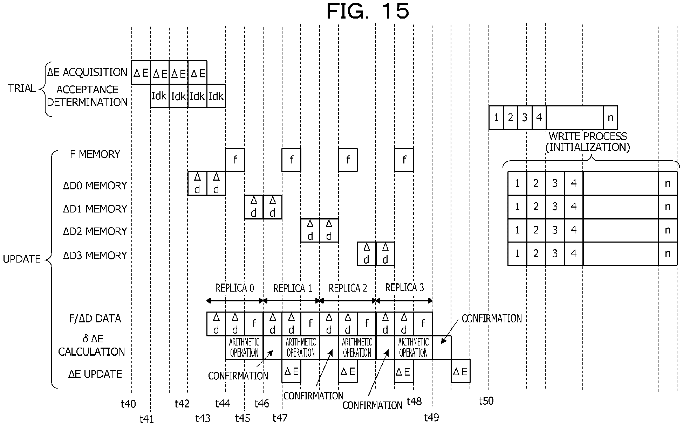

FIG. 15 is a timing chart illustrating an operation example of the data processing device of the fifth embodiment. In the operation example in FIG. 15, similarly to the timing chart illustrated in FIG. 7, an example of a pipeline process using four replicas is illustrated.

Between a timing t40 and a timing t43, a process of acquiring $\Delta E$ is performed in the order from the replica 0 to the replicas 1, 2, and 3. Between a timing t41 and a timing t44, the acceptance determination is performed in the above order from the replica 0. In each replica, the identification number of the multi-valued variable for which the transition has been accepted is output from a transition acceptance determination circuit 22d.

Between a timing t42 and a timing t48, a process of reading the matrix elements of the flow matrix from the F memory 21a and a process of reading the matrix elements of the difference distance matrix from the $\Delta$D memory 41a are performed. In the data processing device 40 of the fifth embodiment, reading of the matrix elements of the difference distance matrix is performed in two cycles for each replica.

From the timing t43 to a timing t49, the matrix elements read from the F memory 21a and the $\Delta$D memory 41a are made to be held in the registers 42a and 42b of the $\delta\Delta E$ calculation circuit 42. The matrix elements to be used for the calculation of $\delta\Delta E$ in the replica 0 are made to be held between the timing t43 and a timing t46, arithmetic operations for $\delta\Delta E$ are performed between the timing t44 and the timing t46, and an arithmetic result is confirmed between the timing t46 and a timing t47. At the timing t46 and the subsequent timings, processes similar to the above-described processes regarding the replica 0 are performed in the order of the replicas 1, 2, and 3. In addition, at the timing t47 and the subsequent timings, every time the arithmetic result for $\delta\Delta E$ for each replica is confirmed, $\Delta E$ of each replica is updated.

When regenerating the transition destination candidates, at a timing t50 and the subsequent timings, the control circuit 33 rearranges the matrix elements of the distance matrix in the D memory 31a according to the current values of the multi-valued variables and the values of the transition destination candidates. Thereafter, the control circuit 33 performs the write process of performing the $\Delta d$ computation to initialize the difference distance matrix stored in the $\Delta D$ memory 41a. The write process is performed in parallel for each replica.

According to the data processing device 40 of the fifth embodiment as described above, the circuit scale of the $\delta\Delta E$ calculation circuit 42 may be reduced by storing the differences in distance to be used for calculating $\delta\Delta E$ in the $\Delta D$ memory 41a in advance. In addition, the time taken to calculate $\delta\Delta E$ may be shortened.

Note that the processing contents (for example, FIG. 1, FIG. 8, and the like) of each of the above embodiments can be implemented by software by causing the data processing device to execute a program.

The program can be recorded in a computer-readable recording medium. As the recording medium, for example, a magnetic disk, an optical disc, a magneto-optical disk, a semiconductor memory, or the like can be used. Examples of the magnetic disk include a flexible disk (FD) and an HDD. Examples of the optical disc include a compact disc (CD), a CD-recordable (R)/rewritable (RW), a digital versatile disc (DVD), and a DVD-R/RW. The program is sometimes recorded in a portable recording medium and distributed. In that case, the program may be copied from the portable recording medium to another recording medium to be executed.

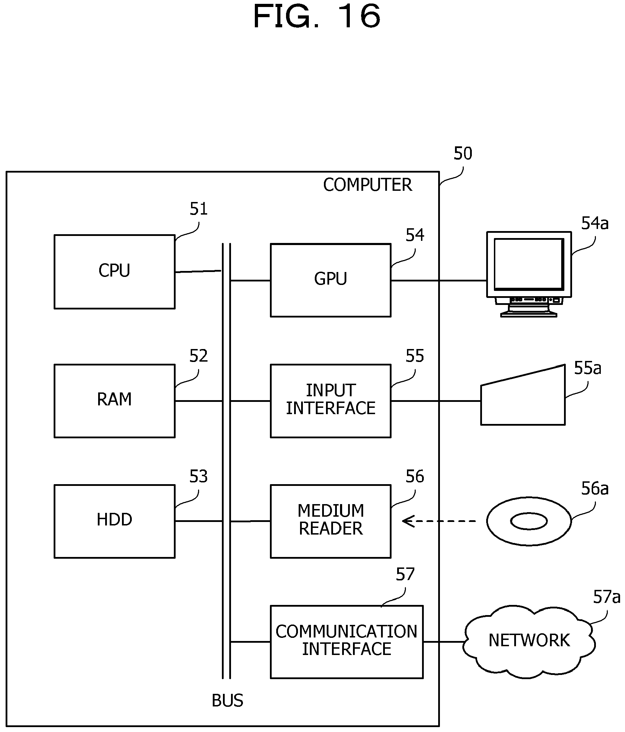

FIG. 16 is a diagram illustrating a hardware example of a computer that is an example of a data processing device.

A computer 50 includes a CPU 51, a RAM 52, an HDD 53, a GPU 54, an input interface 55, a medium reader 56, and a communication interface 57. The units mentioned above are coupled to a bus.

The CPU 51 is a processor including an arithmetic circuit that executes a program command. The CPU 51 loads at least a part of a program and data stored in the HDD 53 into the RAM 52 and executes the program. Note that the CPU 51 may include, for example, a plurality of processor cores in order to execute processes for a plurality of replicas in parallel. In addition, the computer 50 may include a plurality of processors. Note that a set of the plurality of processors (multiprocessor) may be called a "processor".

The RAM 52 is a volatile semiconductor memory that temporarily stores a program to be executed by the CPU 51 and data to be used by the CPU 51 for arithmetic operations. Note that the computer 50 may include a memory of a type other than the RAM 52, or may include a plurality of memories.

The HDD 53 is a nonvolatile storage device that stores software programs such as an operating system (OS), middleware, and application software, and data. The programs include, for example, a program for causing the computer 50 to execute a process of searching for a solution to a combinatorial optimization problem as described above. Note that the computer 50 may include another type of the storage device such as a flash memory or a solid state drive (SSD), or may include a plurality of nonvolatile storage devices.

The GPU 54 outputs an image (for example, an image representing a computation result or the like of the combinatorial optimization problem) to a display 54a coupled to the computer 50 in accordance with a command from the CPU 51. As the display 54a, a cathode ray tube (CRT) display, a liquid crystal display (LCD), a plasma display panel (PDP), an organic electro-luminescence (OEL) display, or the like can be used.

The input interface 55 acquires an input signal from an input device 55a coupled to the computer 50 and outputs the acquired input signal to the CPU 51. As the input device 55a, a pointing device such as a mouse, a touch panel, a touch pad, or a trackball, a keyboard, a remote controller, a button switch, or the like can be used. In addition, a plurality of types of input devices may be coupled to the computer 50.

The medium reader 56 is a reading device that reads a program and data recorded on a recording medium 56a. As the recording medium 56a, for example, a magnetic disk, an optical disc, a magneto-optical disk (MO), a semiconductor memory, or the like can be used. Examples of the magnetic disk include an FD and an HDD. Examples of the optical disc include a CD and a DVD.

The medium reader 56 copies, for example, a program or data read from the recording medium 56a to another recording medium such as the RAM 52 or the HDD 53. The read program is executed by, for example, the CPU 51. Note that the recording medium 56a may be a portable recording medium and is sometimes used for distribution of the program or data. In addition, the recording medium 56a and the HDD 53 are sometimes referred to as computer-readable recording media.

The communication interface 57 is an interface that is coupled to a network 57a and communicates with another information processing device via the network 57a. The communication interface 57 may be a wired communication interface coupled to a communication device such as a switch by a cable, or may be a wireless communication interface coupled to a base station by a wireless link.

(Modifications)

In the data processing device 20 of the second embodiment and the like described above, the columns or rows of the distance matrices are interchanged according to the current values of the multi-valued variables and the values of the transition destination candidates. Such interchange can be applied when searching for a solution to a problem for assigning the element with the first identification number = i to the assignment destination with the second identification number = $\varphi_i$.

However, in a case where a combinatorial optimization problem is formulated as a problem for assigning the assignment destination with the first identification number = i to the element with the second identification number = $\psi_i$, the roles of the flow matrix and the distance matrix are opposite to those in the above case. In that case, the columns or rows of the flow matrix are interchanged according to the current values of the multi-valued variables or the values of the transition destination candidates.

In a case where the columns or rows of the flow matrix are interchanged, for example, a process based on following Formulas (18) and (19) is performed instead of Formulas (11) and (12).

[Mathematical Formula 18]

$$\Delta E(\psi_i \rightarrow \psi_i') \leftarrow \Delta E(\psi_i \rightarrow \psi_i') + d_{ij}(\Delta f_{i\psi_j'} - \Delta f_{i\psi_j}) \qquad (18)$$

[Mathematical Formula 19]

$$\Delta f_{ik} = f_{\psi_i'k} - f_{\psi_ik} \qquad (19)$$

In Formula (19), k = $\psi_j$ or k = $\psi_j'$ is met.

In order to perform the process based on Formulas (18) and (19) in parallel with respect to $\psi_i$ (i = 1 to n), it is sufficient to save a difference value $\Delta f_{ik}$ (alternatively, the flow amount between the elements with the identification number = $\psi_i$ or $\psi_i'$ and the element with the identification number = k) in Formula (19) in a memory having i as the first identification number and k as the second identification number.

Also with respect to the embodiments other than the second embodiment, if the roles of the flow matrix and the distance matrix are interchanged and $\psi_i$ is used instead of $\varphi_i$, the embodiments can be transformed into an embodiment supporting interchange of the columns or rows of the flow matrix.

While one aspect of the data processing device, the program, and the data processing method according to the embodiments has been described based on the embodiments, this is merely an example and is not limited to the description above.

**Claims**

1. A data processing device comprising:

   a storage unit configured to store evaluation function information indicating an evaluation function of a combinatorial optimization problem represented by using a plurality of multi-valued variables; and
   a processing unit configured to perform processing including:

   generating, based on the evaluation function information, transition destination candidates that are a part of respective transitionable ranges of values of the plurality of multi-valued variables;
   calculating, for each of the plurality of multi-valued variables, a change amount of the values of the evaluation function associated with a transition to the transition destination candidates, based on the evaluation function information;
   specifying the multi-valued variables for which the transition is accepted, from among the plurality of multi-valued variables, based on the change amount; and
   causing the values of the specified multi-valued variables to transition to the values of the transition destination candidates.

2. The data processing device according to claim 1, wherein
   the processing unit includes:

a holding circuit that holds the change amount associated with the transition of each of the plurality of multi-valued variables;

a calculation circuit that calculates, for each of the plurality of multi-valued variables, a difference value of the change amount associated with a change in the values of the multi-valued variables for which the transition is accepted; and

an update circuit that updates the change amount by using the difference value.

3. The data processing device according to claim 2, wherein

the combinatorial optimization problem is an assignment problem represented by using a flow matrix and a distance matrix,

the storage unit includes:

a first memory that stores a first matrix that is one of the flow matrix and the distance matrix;

a second memory that stores a second matrix that is the other of the flow matrix and the distance matrix and includes matrix elements arrayed based on the values of the plurality of multi-valued variables; and

a third memory that stores a third matrix that is the other of the flow matrix and the distance matrix and includes the matrix elements arrayed based on the values of the transition destination candidates of the plurality of multi-valued variables, and

the calculation circuit calculates the difference value, based on: first matrix elements of the first matrix designated by identification numbers of the multi-valued variables for which the transition is accepted; second matrix elements of the second matrix and third matrix elements of the third matrix designated by the values before the transition of the multi-valued variables for which the transition is accepted; and fourth matrix elements of the second matrix and fifth matrix elements of the third matrix designated by the values after the transition of the multi-valued variables.

4. The data processing device according to claim 3, wherein

either rows or columns of the second matrix and the third matrix are designated by the values of the multi-valued variables for which the transition is accepted or the values after the transition of the multi-valued variables, and the second matrix elements, the third matrix elements, the fourth matrix elements, or the fifth matrix elements included in the designated rows or columns are read from the second memory or the third memory.

5. The data processing device according to claim 3, wherein

the second matrix elements and the third matrix elements are read in parallel from the second memory and the third memory at a first read timing, and

the fourth matrix elements and the fifth matrix elements are read in parallel from the second memory and the third memory at a second read timing.

6. The data processing device according to claim 3, wherein

the first to fifth matrix elements are read from the first memory, the second memory, or the third memory at different read timings from each other, by using a common read path, and

the calculation circuit inputs the first to fifth matrix elements to a common arithmetic circuit to calculate the difference value.

7. The data processing device according to claim 3, wherein
the processing unit interchanges, between the second matrix and the third matrix, columns or rows of the second matrix and the third matrix designated by the identification numbers of the multi-valued variables for which the transition is accepted.

8. The data processing device according to claim 3, wherein

the transition destination candidates include first transition destination candidates and second transition destination candidates for each of the plurality of multi-valued variables,

the third matrix is arrayed based on the values of the first transition destination candidates, and

the storage unit further includes a fourth memory that stores a fourth matrix that is the other of the flow matrix and the distance matrix and includes the matrix elements arrayed based on the values of the second transition destination candidates.

9. The data processing device according to claim 2, wherein

the combinatorial optimization problem is an assignment problem represented by using a flow matrix and a distance matrix,
the storage unit includes:

a first memory that stores a first matrix that is one of the flow matrix and the distance matrix; and
a second memory that stores a fourth matrix that includes matrix elements expressed by differences between: the values of the matrix elements of a second matrix that is the other of the flow matrix and the distance matrix and is arrayed based on the values of the plurality of multi-valued variables; and the values of a third matrix that is the other of the flow matrix and the distance matrix and is arrayed based on the values of the transition destination candidates of the plurality of multi-valued variables, and
the calculation circuit calculates the difference value, based on: first matrix elements of the first matrix designated by identification numbers of the multi-valued variables for which the transition is accepted; second matrix elements of the fourth matrix designated by the values before the transition of the multi-valued variables for which the transition is accepted; and third matrix elements of the fourth matrix designated by the values after the transition of the multi-valued variables.

10. A program comprising instructions which, when executed by a computer, cause the computer to perform processing comprising:

obtaining evaluation function information stored in a storage unit of the computer, the evaluation function information indicating an evaluation function of a combinatorial optimization problem represented by using a plurality of multi-valued variables; and
generating, based on the evaluation function information, transition destination candidates that are a part of respective transitionable ranges of values of the plurality of multi-valued variables;
calculating, for each of the plurality of multi-valued variables, a change amount of the values of the evaluation function associated with a transition to the transition destination candidates, based on the evaluation function information;
specifying the multi-valued variables for which the transition is accepted, from among the plurality of multi-valued variables, based on the change amount; and
causing the values of the specified multi-valued variables to transition to the values of the transition destination candidates.

11. A data processing method implemented by a computer, the data processing method comprising:

obtaining evaluation function information stored in a storage unit of the computer, the evaluation function information indicating an evaluation function of a combinatorial optimization problem represented by using a plurality of multi-valued variables; and
generating, based on the evaluation function information, transition destination candidates that are a part of respective transitionable ranges of values of the plurality of multi-valued variables;
calculating, for each of the plurality of multi-valued variables, a change amount of the values of the evaluation function associated with a transition to the transition destination candidates, based on the evaluation function information;
specifying the multi-valued variables for which the transition is accepted, from among the plurality of multi-valued variables, based on the change amount; and
causing the values of the specified multi-valued variables to transition to the values of the transition destination candidates.

# FIG. 1

TRANSITIONABLE
RANGE

MULTI-VALUED
VARIABLE $\phi_i \in \{1, 2, \cdots, m\}$

S1

GENERATE TRANSITION DESTINATION
CANDIDATES (NARROW DOWN
TRANSITION DESTINATIONS)

TRANSITION DESTINATION
CANDIDATE $\phi'_i = m$

12a

MULTICOLOR SPIN MACHINE
(CAPABLE OF PARALLEL
TRIALS)

S2

CALCULATE/UPDATE $\Delta E(\phi_i \to \phi'_i)$

S3

TRANSITION ACCEPTANCE
DETERMINATION

S4

$\phi_i \leftarrow \phi'_i$

10

DATA PROCESSING DEVICE

12

PROCESSING
UNIT

11

STORAGE UNIT

11a

EVALUATION
FUNCTION
INFORMATION

# FIG. 2

# FIG. 3

# FIG. 4

# FIG. 5

F MEMORY  21a

# FIG. 6

D MEMORY 21b
(CURRENT STATE)

D MEMORY 21c
(TRANSITION DESTINATION CANDIDATE STATE)

# FIG. 7

# FIG. 8

```
                    ┌─────────────┐
                    │    START    │
                    └─────────────┘
                           │
         ┌─────────────────────────────────────────┐
         │         PERFORM INITIALIZATION          │──── S10
         └─────────────────────────────────────────┘
                           │
         ┌─────────────────────────────────────────┐
         │   PERFORM DATA AND OPERATION SETTING     │──── S11
         └─────────────────────────────────────────┘
                           │
                           ▼                   S12
                  ╱─────────────────╲
                 ╱   IS TRANSITION   ╲         NO
                ╱ DESTINATION CANDIDATE╲──────────────┐
                ╲   TO BE SWITCHED?    ╱               │
                 ╲─────────────────── ╱                │
                      │ YES                            │
         ┌─────────────────────────────────────────┐  │
         │ SWITCH TRANSITION DESTINATION CANDIDATE  │  │
         │     AND REWRITE DISTANCE MATRIX          │──── S13
         └─────────────────────────────────────────┘  │
                           │                           │
         ┌─────────────────────────────────────────┐  │
         │              COMPUTE ΔE                  │──── S14
         └─────────────────────────────────────────┘  │
                           │◄──────────────────────────┘
         ┌─────────────────────────────────────────┐
         │              ACQUIRE ΔE                  │──── S15
         └─────────────────────────────────────────┘
                           │
         ┌─────────────────────────────────────────┐
         │        DETERMINE WHETHER TO ACCEPT       │──── S16
         └─────────────────────────────────────────┘
                           │
         ┌─────────────────────────────────────────┐
         │ SELECT MULTI-VALUED VARIABLE TO BE       │──── S17
         │            TRANSITIONED                  │
         └─────────────────────────────────────────┘
                           │               S18
                           ▼
                  ╱─────────────────╲        NO
                 ╱ IS THERE TRANSITION╲───────────────┐
                 ╲    ACCEPTANCE?     ╱                │
                  ╲─────────────────╱                 │
                      │ YES                           │
         ┌─────────────────────────────────────────┐ │
         │          READ F/D MATRICES               │──── S19
         └─────────────────────────────────────────┘ │
                           │                          │
         ┌─────────────────────────────────────────┐ │
         │            CALCULATE δ ΔE                │──── S20
         └─────────────────────────────────────────┘ │
                           │                          │
         ┌─────────────────────────────────────────┐ │
         │              UPDATE ΔE                   │──── S21
         └─────────────────────────────────────────┘ │
                           │                          │
         ┌─────────────────────────────────────────┐ │
         │     PERFORM COLUMN INTERCHANGE PROCESS   │──── S22
         └─────────────────────────────────────────┘ │
                           │◄─────────────────────────┘
        NO                 ▼                    S23
         ┌────────╱─────────────────╲
         │       ╱  IS SEARCH TO BE  ╲
         │       ╲     ENDED?        ╱
         │        ╲─────────────────╱
         │             │ YES
         │  ┌─────────────────────────────────────────┐
         │  │          OUTPUT SEARCH RESULT            │──── S24
         │  └─────────────────────────────────────────┘
         │             │
         │      ┌─────────────┐
         │      │     END     │
         │      └─────────────┘
```

# FIG. 9

30

# FIG. 10

# FIG. 11

# FIG. 12

21b
D MEMORY
(CURRENT STATE)

$\phi_1$ ..................... $\phi_8$

$\phi_j$

2 5 6 8 3 4 1 7

$\phi''_6$ 1
2
3
4
$\phi_6$ 5
6
7
8

$d_{\phi i \phi j}$

21c
D MEMORY
(FIRST TRANSITION DESTINATION
CANDIDATE STATE)

$\phi'_1$ ..................... $\phi'_8$

$\phi_j$

4 3 7 1 5 2 8 6

$\phi''_6$ 1
2
3
4
$\phi_6$ 5
6
7
8

$d_{\phi' i \phi j}$

21d
D MEMORY
(SECOND TRANSITION
DESTINATION CANDIDATE STATE)

$\phi''_1$ ..................... $\phi''_8$

$\phi_j$

4 3 7 1 5 2 8 6

$\phi''_6$ 1
2
3
4
$\phi_6$ 5
6
7
8

$d_{\phi'' i \phi j}$

# FIG. 13

40

31b     41

STORAGE UNIT

D MEMORY    31a

⬇

Δd COMPUTATION

⬇

ΔD MEMORY    41a

F MEMORY    21a

33

CONTROL CIRCUIT

MEMORY CONTROL CIRCUIT

$\delta$ ΔE CALCULATION CIRCUIT    42

f/Δd    42a
Δd    42b

+/x    32c

$\delta$ ΔE    32d

ΔE UPDATE CIRCUIT    22b

ΔE HOLDING CIRCUIT    22c

TRANSITION ACCEPTANCE DETERMINATION CIRCUIT    22d

# FIG. 14

ΔD MEMORY  <u>41a</u>

| $\phi_i$ | $\phi_1$ | $\phi_2$ | $\phi_3$ | $\phi_4$ | $\phi_5$ | $\phi_6$ | $\phi_7$ | $\phi_8$ |
|---|---|---|---|---|---|---|---|---|
| | 2 | 5 | 6 | 2 | 3 | 5 | 1 | 7 |
| $\phi'_i$ | $\phi'_1$ | $\phi'_2$ | $\phi'_3$ | $\phi'_4$ | $\phi'_5$ | $\phi'_6$ | $\phi'_7$ | $\phi'_8$ |
| | 4 | 6 | 4 | 7 | 1 | 6 | 3 | 5 |

$$\Delta d_{\phi_i \phi_j}$$

$\phi_j$ : 1, 2, 3, 4, $\phi_6$ → 5, $\phi'_6$ → 6, 7, 8

# FIG. 15

# FIG. 16

Europäisches
Patentamt

European
Patent Office

Office européen
des brevets

# EUROPEAN SEARCH REPORT

Application Number

EP 24 17 1211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/414184 A1 (BAGHERBEIK MOHAMMAD [CA] ET AL) 29 December 2022 (2022-12-29) * paragraph [0026] * * paragraph [0076] - paragraph [0084] * ----- | 1-11 | INV. G06N5/01 G06F17/11 |

TECHNICAL FIELDS
SEARCHED (IPC)

G06N
G06F

The present search report has been drawn up for all claims

| Place of search | Date of completion of the search | Examiner |
|---|---|---|
| The Hague | 14 October 2024 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1211

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | | Publication date | Patent family member(s) | | Publication date |
|---|---|---|---|---|---|
| US 2022414184 | A1 | 29-12-2022 | CN 115496251 | A | 20-12-2022 |
| | | | EP 4105837 | A1 | 21-12-2022 |
| | | | US 2022414184 | A1 | 29-12-2022 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023001055 A

- JP 2022165250 A